# EUROPÄISCHE PATENTSCHRIFT

(11) **EP 3 539 375 B1**
(45) Veröffentlichungstag und Bekanntmachung des Hinweises auf die Patenterteilung: **01.09.2021**
(21) Anmeldenummer: 19161948.5
(22) Anmeldetag: 11.03.2019
(51) Int. Cl.: A01M 7/00

(54) **VERTEILSYSTEM UND VERFAHREN ZUR AUSBRINGUNG VON SPRITZFLÜSSIGKEITEN FÜR EINE LANDWIRTSCHAFTLICHE FELDSPRITZE**
DISTRIBUTED SYSTEM AND METHOD FOR THE APPLICATION OF SPRAYED FLUIDS FOR AN AGRICULTURAL FIELD SPRAYING DEVICE
SYSTÈME DE DISTRIBUTION ET PROCÉDÉ D'ÉPANDAGE DES FLUIDES DE PULVÉRISATION POUR UN PULVÉRISATEUR AGRICOLE

(30) Priorität: 12.03.2018 DE 102018105630
(43) Veröffentlichungstag der Anmeldung: 18.09.2019
(73) Patentinhaber: HORSCH LEEB Application Systems GmbH, 94405 Landau an der Isar (DE)
(72) Erfinder: Leeb, Theodor, 94562 Oberpöring (DE)
(74) Vertreter: v. Bezold & Partner Patentanwälte - PartG mbB

(56) Entgegenhaltungen:
- EP-A1- 0 463 007
- EP-A1- 2 227 949
- DE-T2- 69 817 421
- US-A1- 2016 175 869
- US-B2- 8 191 795

## Beschreibung

Die vorliegende Erfindung betrifft ein Verteilsystem zur Ausbringung von Spritzflüssigkeiten für eine landwirtschaftliche Feldspritze mit den Merkmalen des unabhängigen Anspruch 1. Die Erfindung betrifft zudem ein Verfahren zur Ausbringung von Spritzflüssigkeiten mit den Merkmalen des Verfahrensanspruchs 19.

Zur Verteilung von flüssigen und/oder festen landwirtschaftlichen Pflanzenschutzmitteln bzw. Spritzflüssigkeiten werden Feldspritzen wie z.B aus DE69817421 bekannt eingesetzt. Wobei derartigen Feldspritzen zur möglichst exakten Verteilung der jeweiligen Spritzflüssigkeiten jeweils ein Verteilsystem zugeordnet ist. Die Verteilung der Spritzflüssigkeit über einen Pflanzenbestand bzw. über einer Ackerfläche erfolgt jeweils mittels verschiedenster Spritzdüsen. Wobei diese Spritzdüsen in der Regel an einem sog. Düsenstock angebaut sind, welchem Düsenstock zudem eine, zwei oder mehr Spritzdüsen zugeordnet sein können, welche Spritzdüsen zudem verschiedene Eigenschaften aufweisen, d.h. verschiedene Tropfenspektren erzeugen, können.

Um mit einer Spritzdüse, bei konstantem Druck und gleich bleibenden Tropfenspektrum, verschiedene Ausbringmengen zu erreichen sind zudem Systeme bzw. Spritzdüsen bekannt, welche mit einer Pulsweitenmodulation angesteuert werden. Dazu wird jeder Spritzdüse ein Ventil zugeordnet welches bspw. in einer Frequenz von 10 Hz (Hertz) geschaltet wird. Dies bedeutet, dass die Düse 10-mal pro Sekunde geöffnet und geschlossen wird. Zudem weisen die Ventile jeweils einen veränderbaren Tastgrad von bspw. 80% auf. Anhand der Frequenz und des jeweiligen Tastgrad kann somit jeweils die Durchflussmenge an Spritzflüssigkeit durch die Spritzdüse variiert werden. Um dies noch zu verbessern sind zudem Systeme bekannt bei welchem die Frequenz noch weiter erhöht wurde und bspw. 25 Hz oder 50 Hz beträgt.

Ein derartiges System bzw. eine derartige Steuerung von Spritzdüsen mittels Pulsweitenmodulation wurde bspw. durch die Düsensteuerung "DynaJet Flex 7120" des Unternehmens "TeeJet Technologies" bereits bekannt. Durch ein schnelles Öffnen und Schließen, d.h. durch eine entsprechend Hohe Frequenz sowie durch eine Anpassung des jeweiligen Tastgrad, d.h. durch eine Anpassung der jeweiligen Öffnungszeiten lassen sich somit große Spannen bei der Anpassung der Ausbringmenge mit der gleichen Spritzdüse realisieren.

Nachteilig an dem aus dem Stand der Technik bekannt gewordenen System ist jedoch, dass bei diesem jeder Spritzdüse jeweils ein Ventil zur Erzeugung der Pulsfrequenz bzw. zur Erzeugung der Pulsweitenmodulation zugeordnet werden muss. So werden bspw. bei einem Abstand der Spritzdüsen zueinander von 25cm und einer Arbeitsbreite der Feldspritze von bspw. 30 Meter bis zu 120 Spritzdüsen mit jeweils einem separaten Ventil benötigt.

Insofern mittels der Feldspritze die Möglichkeit gegeben sein soll noch weitere Ausbringmuster und Tropfenspektren erzeugen zu können, können zudem bspw. an einem Düsenstock zwei oder vier oder mehr Spritzdüsen angebracht sein, welchen Spritzdüsen wiederum jeweils ein Ventil zur Pulsweitenmodulation zugeordnet sein kann. Durch eine derartige Ausführung können an der Feldspritze mehrere hundert Ventile angebracht sein, welche Ventile an sich teuer sind und zudem kostenintensive Steuerungen und Verdrahtungen oder dergl. benötigen. So sind hierbei durchaus Kosten in Höhe von bis zu 900,-€ je Meter Arbeitsbreite möglich, so dass sich der Einsatz von derartigen Ventilen zur Pulsweitenmodulation durch die Einsparung an Pflanzenschutzmittel alleine nicht amortisiert.

Auch können die Ventile, insbesondere wenn diese mit dem jeweiligen Pflanzenschutzmittel bzw. mit der jeweiligen Spritzflüssigkeit in Kontakt kommen beschädigt werden. Wodurch wiederum das Arbeitsergebnis der Spritzdüsen negativ beeinflusst werden kann.

Ziel der vorliegenden Erfindung ist es somit, ein Verteilsystem für eine landwirtschaftliche Feldspritze zur Ausbringung von Spritzflüssigkeit zur Verfügung zu stellen, bei welchem die durch eine Pulsweitenmodulation bei einer Ausbringung von Pflanzenschutzmittel hervorgerufenen Vorteile vorhanden sind, dies jedoch mit einer auf ein Minimum reduzierten Anzahl an Schaltelementen zur Erzeugung einer Pulsweitenmodulation zu erreichen ohne hierbei die Verteilqualität negativ zu beeinflussen.

Diese Aufgaben werden gelöst durch ein Verteilsystem zur Ausbringung von Spritzflüssigkeiten, welches insbesondere bei landwirtschaftlichen Feldspritzen Verwendung findet mit den Merkmalen des unabhängigen Anspruch 1, sowie durch ein Verfahren zur Ausbringungen von Spritzflüssigkeiten mit den Merkmalen des unabhängigen Anspruch 19. Vorteilhafte Weiterbildungen sind in den abhängigen Ansprüchen und der Beschreibung angegeben.

Zur Lösung der vorgenannten Aufgaben schlägt die Erfindung ein Verteilsystem vor, welches Verteilsystem insbesondere an einer landwirtschaftlichen Verteilmaschine bzw. Feldspritze Verwendung findet. Die Feldspritze umfasst zumindest einen Vorratsbehälter zur Bereitstellung der jeweiligen Spritzflüssigkeit, wobei die Spritzflüssigkeit mittels einer Pumpe mit variabel veränderbaren und/oder mittels auf einen konstanten Wert geregelten Druck vom Vorratsbehälter entlang einer, an einem an der Feldspritze angebauten Spritzgestänge geführten, Flüssigkeitsleitung gefördert wird. Wodurch jeweils am Spritzgestänge angebrachte Spritzdüsen mit Spritzflüssigkeit versorgt werden.

Um ein Verteilsystem für eine landwirtschaftliche Feldspritze zur Ausbringung von Spritzflüssigkeit zur Verfügung zu stellen bei welchem die durch eine Pulsweitenmodulation bei einer Ausbringung von Pflanzenschutzmittel hervorgerufenen Vorteile vorhanden sind, dies jedoch mit einer auf ein Minimum reduzierten Anzahl an Schaltelementen zur Erzeugung einer Pulsweitenmodulation zu erreichen ohne hierbei die Verteilqualität negativ zu beeinflussen, ist vorgesehen, dass der Flüssigkeitsleitung ein mittels einer variabel veränderbaren Pulsweitenmodulation angesteuertes Schaltelement zugeordnet oder nachgeordnet ist, und dass dem Schaltelement zwei zueinander beabstandete und mit diesem in fluider Verbindung stehende Spritzdüsen nachgeordnet sind. Insbesondere wird mittels des erfindungsgemäßen Verteilsystem es somit ermöglicht, dass mit nur einem Schaltelement mit Pulsweitenmodulation eine im Vergleich zu den aus dem Stand der Technik bekannt gewordenen Systemen, wesentlich größere Arbeitsbreite abgedeckt werden kann.

Insofern das mittels einer variabel veränderbaren Pulsweitenmodulation angesteuerte Schaltelement der Flüssigkeitsleitung zugeordnet ist, kann mittels des Schaltelement insbesondere der Volumenstrom entlang der Flüssigkeitsleitung direkt geregelt bzw. beeinflusst werden. Insofern das mittels einer variabel veränderbaren Pulsweitenmodulation angesteuerte Schaltelement der Flüssigkeitsleitung nachgeordnet ist, kann mittels des Schaltelement insbesondere der von der Flüssigkeitsleitung abgezweigte bzw. aufgeteilte Volumenstrom geregelt bzw. beeinflusst werden, wobei von dieser Regelung der Volumenstrom entlang der Flüssigkeitsleitung zumindest weitgehend unbeeinflusst bleiben kann.

Es sei zunächst darauf hingewiesen, dass es sich unter einer Pulsweitenmodulation bzw. einem mit einer veränderbaren Pulsweitenmodulation ansteuerbarem Schaltelement insbesondere um derartige Schaltelemente handelt, welche mittels einer Pulsweitenmodulation (PWM) bzw. einer Pulsdauermodulation bzw. einer Pulslängenmodulation, bzw. einem Unterschwingungsverfahren oder einer Pulsbreitenmodulation ansteuerbar sind. Wobei all diese Ansteuerungsarten im Nachfolgenden unter dem Begriff der Pulsweitenmodulation bzw. PWM zusammengefasst werden.

Insbesondere kann es sich beim Pulsweitenmodulierten Schaltelement um ein Ventil wie bspw. ein Elektromagnetventil handeln. Auch kann das Schaltelement ein motorisch angetriebenes Element sein, bspw. ein Schrittmotor oder dergl. motorisches Element. Auch wären diverse Aktoren als Schaltelement wie bspw. Zylinder denkbar. Das Schaltelement ist jeweils derartig ausgeführt, dass mittels diesem die jeweilige Flüssigkeitsförderung bzw. der Volumenstrom im Verteilsystem und/oder in den Spritzdüsen in definierten bzw. definierbaren Pulsweiten erfolgen kann. Hierfür kann das Schaltelement jeweils mittels einer Steuerungs- und/oder Regelungseinrichtung entsprechend angesteuert werden.

Das Schaltelement kann mit einer festen oder variablen veränderbaren Frequenz mittels einer Steuerungs- und/oder Regelungseinrichtung angesteuert werden. Wobei die Frequenz hierbei größer oder gleich 10 Hz oder 50Hz oder 200 Hz sein kann. Auch kann die Frequenz ein in der Steuerungs- und/oder Regelungseinrichtung hinterlegter Optimierungsparameter sein, welcher Optimierungsparameter in Abhängigkeit der jeweiligen Komponenten des Verteilsystems festgelegt sein kann. Insbesondere kann vorgesehen sein, dass die Frequenz in Abhängigkeit der jeweiligen Spritzdüsen erhöht oder verringert wird.

Die Pulsweitenmodulation wird zudem durch einen Tastgrad definiert. Wobei dieser Tastgrad durch ein Verhältnis zwischen der Impulsdauer t (Zeitdauer) und der Periodendauer T (Schwingungsdauer) bestimmt wird. Die Impulsdauer t kann in diesem Zusammenhang auch als Ein-Zeit bezeichnet werden, d.h. als die Zeit in der das Schaltelement jeweils eingeschalten ist, wobei in dieser Position das Schaltelement vorzugsweise geöffnet ist.

Die Angabe des Tastgrad erfolgt zudem als Prozentwert %. Der Tastgrad ist somit definiert durch t / T. Dies bedeutet, ist das Verhältnis t = 0 ist das Schaltelement permanent vollständig geschlossen. Wohingegen bei einem Verhältnis von t = T das Schaltelement permanent vollständig geöffnet ist.

Erfindungsgemäß kann vorgesehen sein, dass gilt 0 < t/T < 1 wodurch das Schaltelement intermittierend geöffnet und geschlossen wird. Wobei die Ausbringmenge an Spritzflüssigkeit durch Variation des Tastgrad, d.h. durch Variation des Verhältnis t / T verringert oder vergrößert werden kann. Insbesondere erfolgt eine Erhöhung der Ausbringmenge durch eine Erhöhung des Tastgrad, insbesondere durch eine Erhöhung der Impulsdauer t sowie eine Verringerung der Ausbringmenge durch eine Verringerung des Tastgrad, insbesondere durch eine Verringerung der Impulsdauer t.

Zur Variation der Ausbringmenge bzw. zur Variation des Tastgrad könnte mittels der das Schaltelement ansteuernden Pulsweitenmodulation sowohl die Impulsdauer t als auch die Periodendauer T variiert werden, wobei dies jeweils mittels eines in einer Regelungs- und/oder Steuerungseinrichtung hinterlegten Regelungsprogramms erfolgen kann. Ebenso kann eine Variation des Tastgrad manuell durch eine Bedienperson erfolgen.

Beträgt z.B. der Tastgrad 80% und die Frequenz 1 Hz, so bedeutet dies, dass bezogen auf die Frequenz von 1Hz, d.h. 1s, dass Schaltelement theoretisch 0,8s geöffnet ist und 0,2s geschlossen ist. Da jedoch Schaltelemente und deren zugeordnete Spritzdüsen in der Regel eine Eigenträgheit aufweisen, werden diese aufgrund der hohen Frequenzen in der Regel nicht komplett geschlossen sondern jeweils in Abhängigkeit der Frequenz und des Tastgrad nur auf eine entsprechende sich zwischen der geschlossenen und geöffneten Position einstellende Zwischenstellung. Bezogen auf den Durchfluss an Spritzflüssigkeit bedeutet dies, dass sich somit ein Mittelwert zwischen der geöffneten Stellung des Schaltelement und der geschlossenen Stellung des Schaltelements einstellt. So das auch die Ausbringmenge an Spritzflüssigkeit sich auf diesen Zwischenwert bzw. Mittelwert einstellt, was wiederum bedeutet, dass die Durchflussmenge bzw. die Ausbringmenge an Spritzflüssigkeit generell, gegenüber einem geöffneten Schaltelement reduziert wird.

In Abhängigkeit des jeweiligen Tastgrad und/oder der Frequenz kann somit die Ausbringmenge erhöht oder verringert oder zumindest weitgehend konstant gehalten werden, wobei hierbei in der Regel gilt, desto größer der Tastgrad desto größer die Ausbringmenge.

Zudem gilt desto kleiner die Frequenz desto größer die Zeit zur Schließung des Schaltelement, bzw. desto größer die Frequenz desto kleiner die Zeit zur Schließung des Schaltelement und desto größer der sich einstellende Mittelwert und desto größer wiederum die Ausbringmenge.

Mittels der Pulsweitenmodulation wird somit das Schaltelement jeweils mittels eines Rechtecksignal angesteuert, welches Rechtecksignal durch die Eigenträgheit des Schaltelements bzw. der Spritzdüse, insbesondere an dessen Schließmechanismus bzw. Öffnungsmechanismus eine Sinus ähnliche Schwingung und/oder ein Dreiecksignal und/oder ein Sägezahnsignal hervorruft. Wobei die Art des sich ergebenden Signals jeweils von der Eigenträgheit des Schaltelement und der Frequenz abhängig sein kann.

Bei der Feldspritze zur Ausbringung von Spritzflüssigkeit kann es sich sowohl um eine als selbstfahrend ausgebildete Feldspritze als auch als mittels eines Zugfahrzeuges gezogene Feldspritze handeln. Auch kann es sich bei der Feldspritze um eine an einem Zug- und/oder Transportfahrzeug insbesondere Traktor angebaute Feldspritze handeln. Auch könnte die Feldspritze als autonomes Fahrzeug ausgeführt sein.

Mittels erfindungsgemäßer Feldspritzen, bzw. mittels Feldspritzen an welchen jeweils das erfindungsgemäße Verteilsystem angebracht ist, werden Pflanzenschutzmittel bzw. Spritzmittel über einer landwirtschaftlichen Ackerfläche verteilt. Wobei das Pflanzenschutzmittel insbesondere eine mit einer Trägerflüssigkeit (vorzugsweise Wasser) vermischte Flüssigkeit sein kann und/oder wobei das Pflanzenschutzmittel ein in einer Trägerflüssigkeit gelöstest Granulat sein kann. Wobei die somit erzeugten Gemische als Spritzflüssigkeit bezeichnet werden können. Auch können verschiedene Granulate und/oder Flüssigkeiten mit einer Trägerflüssigkeit vermischt werden und wiederum eine Spritzflüssigkeit bilden. Als Pflanzenschutzmittel finden bspw. Pestizide, Herbizide, Fungizide, Insektiziede oder dergl. Stoffe bzw. Mittel Verwendung. Auch können als Pflanzenschutzmittel verschiedenste Düngemittel eingesetzt werden.

Zum mitführen und bereitstellen der jeweiligen Pflanzenschutzmittel bzw. der jeweiligen Spritzflüssigkeiten ist der Feldspritze zugeordnet oder mit dieser wirkverbunden ein Vorratsbehälter, bzw. umfasst das Verteilsystem einen entsprechenden Vorratsbehälter zum mitführen und bereitstellen der jeweiligen Spritzflüssigkeit. Auch können zwei oder mehr Vorratsbehälter vorgesehen sein mittels derer verschiedene Pflanzenschutzmittel bzw. Spritzflüssigkeiten mitgeführt werden können, welche Vorratsbehälter zudem unterschiedliche Volumen aufweisen können.

Der Feldspritze ist, vorzugsweise in deren hinterem Bereich, ein Spritzgestänge zugeordnet. Welches Spritzgestänge zudem mittels Stellglieder in dessen Höhe, in Bezug auf einen Pflanzenbestand bzw. auf einen die Komponenten der Feldspritze tragenden Rahmen, verändert werden kann. Das Spritzgestänge erstreckt sich in einer Arbeitsposition mit einer großen Arbeitsbreite von bspw. 12 Meter; 18 Meter, 30 Meter oder mehr quer zu einer Fahrtrichtung der Feldspritze, wobei sich das Spritzgestänge zudem aus zwei, drei oder mehr Segmenten zusammensetzen kann. Welche Segmente zudem um aufrechte Achse zueinander verschwenkt werden können. Zudem kann das Spritzgestänge bzw. dessen Segmente um aufrechte Achsen zueinander derartig verschwenkt werden, dass eine für eine Straßenfahrt gesetzlich geforderte Transportbreite von bspw. 3 Meter nicht überschritten wird.

Zur Verteilung der Spritzflüssigkeit sind am Spritzgestänge zueinander beabstandet eine Mehrzahl von Spritzdüsen angeordnet. Wobei mittels der Spritzdüsen jeweils eine Zerstäubung der Spritzflüssigkeit erfolgt. Mittels der Spritzdüsen wird somit jeweils ein, Tropfenspektrum erzeugt, auf Basis welches Tropfenspektrum anschließend jeweils die zu behandelnde Ackerfläche bzw. dessen Pflanzen entsprechend mit Spritzflüssigkeit bedeckt und benetzt werden.

In einer Weiterbildung der Erfindung kann vorgesehen sein, dass die Spritzdüsen an sog. Düsenstöcken angebaut sind. Welche Düsenstöcke wiederum zueinander beabstandet am Spritzgestänge angebracht sind. Bei den Düsenstöcken kann es sich um Einfach-, Zweifach- oder Mehrfachdüsenstöcke handeln, d.h. an den Düsenstöcken kann eine oder können zwei oder mehr Spritzdüsen angebracht sein. Bei einem Zweifach- oder Mehrfachdüsenstock können zudem Spritzdüsen angebracht sein welche verschiedene Eigenschaften aufweisen, d.h. welche insbesondere verschiedene Tropfenspektren erzeugen. Wobei auch hierbei vorgesehen sein kann, dass jeweils nur mittels einer von den an einem Zweifach- oder Mehrfachdüsenstock angebrachten Spritzdüsen eine Verteilung von Spritzflüssigkeit erfolgt, wobei die Spritzdüsen hierfür bspw. automatisiert mittels bspw. eines Ventils oder manuell durch eine Bedienperson zu- oder abgeschaltet werden können.

Als Spritzdüsen können bspw. Injektordüsen und/oder Bandspritzdüsen, und/oder Flachstrahldüsen und/oder Doppelflachstrahldüsen und/oder Hochdruckdüsen und/oder dergl. Spritzdüsen verwendet werden. Auch können an zumindest einen Teil der Spritzdüsen wiederum jeweils sog. Schleppschläuche angebaut werden.

Die zumindest zwei dem Schaltelement nachgeordneten Spritzdüsen und/oder die Düsenstöcke können in einem Mindestabstand zueinander von 10cm angebracht sein. Insbesondere sind die Spritzdüsen und/oder die Düsenstöcke in einem Abstand von 25cm und/oder 50cm und/oder 100cm zueinander angebracht. Auch andere Abstände wären hierbei möglich. Wobei sich die Abstände bei einem Mehrfachdüsenstock jeweils auf deren Mittelpunkt beziehen können. Zudem beziehen sich die Abstände jeweils quer zur Fahrrichtung, bzw. in Erstreckungsrichtung des Spritzgestänges.

Zur Versorgung der Düsenstöcke bzw. der Spritzdüsen mit Spritzflüssigkeit sind diese mit zumindest einer, die Spritzflüssigkeit führenden Flüssigkeitsleitung verbunden. Die Flüssigkeitsleitung ist zudem mit dem Vorratsbehälter verbunden.

Die Flüssigkeitsleitung kann sich ebenso aus mehreren Abschnitten zusammensetzen. Welche Abschnitte jeweils die Komponenten des Verteilsystems verbinden. Auch können zwischen den Abschnitten bspw. Abzweige für Düsenstöcke und/oder Spritzdüsen angebracht sein.

In einer Weiterbildung kann die Flüssigkeitsleitung zusammen mit dem Vorratsbehälter und der Pumpe einen Flüssigkeitskreislauf bilden, so dass mittels der Flüssigkeitsleitung die Spritzflüssigkeit vom Vorratsbehälter aus mittels der Pumpe zum Spritzgestänge bzw. zu den dem Spritzgestänge zugeordneten Spritzdüsen und/oder Düsenstöcken gefördert wird und anschließend die Flüssigkeitsleitung wiederum zurück in den Vorratsbehälter gefördert wird. Die Flüssigkeitsleitung kann somit eine Ringleitung bilden, in welcher Ringleitung zudem die Spritzflüssigkeit permanent zirkuliert. Dies hat den Vorteil das allen Spritzdüsen und/oder Düsenstöcken jeweils genügend Spritzflüssigkeit zur Verfügung gestellt wird, welche Spritzflüssigkeit anschließen durch Öffnung der Spritzdüsen und/oder der Düsenstöcke jeweils durch diese ausgebracht wird. Nicht benötigte Spritzflüssigkeit wird hingegen wieder zum Vorratsbehälter zurück gefördert bzw. zirkuliert. Durch den somit gebildeten Flüssigkeitskreislauf zirkuliert die Spritzflüssigkeit permanent im Verteilsystem.

Auch kann das Verteilsystem mehrere derartige Flüssigkeitskreisläufe vorsehen, so dass bspw. jede Teilbreite einen separaten Flüssigkeitskreislauf aufweist. Wobei die zwei oder mehr Flüssigkeitskreisläufe einen gemeinsamen Vorratsbehälter und eine gemeinsame Pumpe aufweisen können, aber auch jeweils einen separaten Vorratsbehälter und/oder eine separate Pumpe aufweisen können.

Auch denkbar wäre es dass jede Spritzdüse und/oder Düsenstock mit zwei oder mehr derartigen Flüssigkeitsleitungen bzw. Flüssigkeitskreisläufen verbunden ist um somit bspw. verschiedene Spritzflüssigkeiten ausbringen zu können.

Die Spritzflüssigkeit wird zudem jeweils mit veränderbarem und/oder mittels eines auf einen konstanten Wert geregelten Druck mittels einer Pumpe entlang der Flüssigkeitsleitung gefördert. Wobei der Flüssigkeitsleitung sowie dem Flüssigkeitskreislauf zudem, zur Veränderung der Ausbringmenge zumindest ein Regelventil zur Variation der Durchflussmenge an Spritzflüssigkeit durch die Flüssigkeitsleitung zugeordnet ist. Das Regelventil kann bspw. ein Durchgangsventil oder ein Volumenstromregler oder dergl. Ventil zur Regelung der Durchflussmenge an Spritzflüssigkeit sein.

Die Pumpe kann bspw. eine Kreiselpumpe oder eine Kolbenmembranpumpe oder dergl. Pumpe sein. Die Pumpe kann zudem hydraulisch und/oder elektrisch und/oder pneumatisch angetrieben sein. Zudem kann die Pumpe bspw. mittels eines diesem zugeordneten Proportionalventil die jeweils benötigte Menge regeln. Auch kann die Pumpe mittels einer Regelungs- und/oder Steuerungseinrichtung entsprechend angesteuert werden und einen definierten bzw. einen variabel definierbaren Druck in der Flüssigkeitsleitung bzw. im Verteilsystem erzeugen. Wobei diese Ansteuerung automatisiert oder durch Vorgabe durch eine Bedienperson erfolgen kann.

Wobei insbesondere vorgesehen sein kann, dass der jeweilige Druck in Abhängigkeit der verwendeten Spritzdüsen und der jeweiligen Pulsweitenmodulation konstant bleibt, d.h. dass dieser jeweils auf einen zumindest weitgehend konstanten Druck in der Flüssigkeitsleitung bzw. im Verteilsystem geregelt wird. Wobei diese konstante Regelung auch Abweichungen von bspw. 0,1bar oder 0,2bar oder mehr zulassen kann.

Der Druck in der Flüssigkeitsleitung kann bspw. mittels der Pumpe variiert werden und größer gleich 0,5bar und kleiner gleich 20 bar sein, insbesondere jedoch kleiner gleich 10 bar sein.

Zudem können zur Überwachung des jeweiligen Druck in der Flüssigkeitsleitung bzw. im Verteilsystem auch entsprechende Sensoren bzw. Überwachungsmittel vorhanden sein. Insbesondere kann dieser Druck als Regelgröße für ein in der Regelungseinrichtung hinterlegtes Regelungsprogramm dienen. Als Sensoren bzw. Überwachungsmittel können hierbei bspw. Drucksensoren verwendet werden.

Um eine noch exaktere Verringerung bzw. Einstellung der Ausbringmenge zu erreichen kann zudem vorgesehen sein, dass der jeweilige Druck in der Flüssigkeitsleitung entsprechend der Pulsweitenmodulation bzw. des Tastgrads des Schaltelements variiert wird.

In einer Ausführungsvariante kann vorgesehen sein, dass der Flüssigkeitsleitung und/oder dem Flüssigkeitskreislauf ein mittels einer variabel veränderbaren Pulsweitenmodulation angesteuertes Schaltelement zugeordnet ist, d.h. in die Flüssigkeitsleitung kann ein Schaltelement integriert sein und/oder ein Schaltelement kann mit der Flüssigkeitsleitung derartig wirkverbunden sein, dass eine mittels des Schaltelement erzeugte Pulsweitenmodulation auf den Flüssigkeitsdurchfluss durch die Flüssigkeitsleitung bzw. auch den Flüssigkeitskreislauf entsprechend übertragen wird.

In einer weiteren Ausführungsvariante kann vorgesehen sein, dass der Flüssigkeitsleitung ein mittels einer variabel veränderbaren Pulsweitenmodulation angesteuertes Schaltelement nachgeordnet ist, d.h. in der Flüssigkeitsleitung kann bspw. ein Abzweig angebracht sein, an welchen Abzweig ein Verbindungselement und/oder ein Düsenstock anschließt. Somit könnte auch dem Abzweig und/oder dem Verbindungselement und/oder dem Düsenstock, welche somit jeweils der Flüssigkeitsleitung nachgeordnet sind, wiederum ein Schaltelement zugeordnet sein bzw. derartig mit diesen wirkverbunden sein, dass eine mittels des Schaltelement erzeugte Pulsweitenmodulation auf den Flüssigkeitsdurchfluss durch den Abzweig und/oder durch das Verbindungselement und/oder den Düsenstock entsprechend übertragen wird.

Um die Anzahl an Schaltelementen auf ein Minimum zu reduzieren, ist erfindungsgemäß vorgesehen eine möglichst große Arbeitsbreite der Feldspritze mit nur einem Schaltelement abzudecken, wobei dies erfindungsgemäß dadurch erreicht wird, dass dem Schaltelement zumindest zwei, zueinander beabstandete Spritzdüsen nachgeordnet sind, welche Spritzdüsen zudem in fluider Verbindung mit dem Schaltelement bzw. mit der durch das Schaltelement in dessen Flüssigkeitsdurchfluss veränderten Flüssigkeitsleitung und/oder den Abzweig und/oder das Verbindungselement und/oder dem Düsenstock in Verbindung stehen, so dass die auf diese wirkende Pulsweitenmodulation auf die wenigstens zwei nachfolgenden Spritzdüsen übertragen wird.

Dem Schaltelement können zumindest zwei Spritzdüsen beabstandet zueinander nachgeordnet sein, wobei deren Abstand zueinander wenigstens 10cm oder mehr beträgt. Vorzugsweise beträgt dieser Abstand 25cm und/oder 50cm und/oder 100cm. Auch andere Abstände wären denkbar.

Es sei darauf hingewiesen, dass dem Schaltelement wiederum zwei Düsenstöcke nachgeordnet sein können an welchen Düsenstöcken wiederum jeweils zumindest eine Spritzdüse angebracht ist, wobei durch den Abstand der Düsenstöcke zueinander wiederum dem Schaltelement zumindest zwei zueinander beabstandet angeordnete Spritzdüsen nachgeordnet sind.

In einer Weiterbildung der Erfindung ist der Abstand der wenigstens zwei Spritzdüsen derartig definiert, dass sich die durch diese erzeugten Tropfenspektren nicht gegenseitig negativ beeinflussen.

Durch eine derartige Ausführung bzw. durch ein erfindungsgemäßes Verteilsystem wird somit die mittels eines Schaltelements erzeugte Pulsweitenmodulation nicht wie aus dem Stand der Technik bekannt nur auf eine Spritzdüse und somit auf eine sehr geringe Arbeitsbreite des Spritzgestänge übertragen sondern auf eine Mehrzahl von Spritzdüsen und somit auf eine entsprechend größere Arbeitsbreite des Spritzgestänges.

In einer Weiterbildung kann vorgesehen sein, dass das jeweilige mittels der Spritzdüsen erzeugte Tropfenspektrum und/oder die durch die Spritzflüssigkeit auf dem Pflanzenbestand hervorgerufene Benetzung sensorisch erfasst wird und die jeweilige Pulsweitenmodulation auf Basis dieses Tropfenspektrum und/oder auf Basis dieser Benetzung mittels einer Steuerungs- und/oder Regelungseinrichtung bzw. auf Basis eines in einer Steuerungs- und/oder Regelungseinrichtung hinterlegten Regelungsprogramm variabel angepasst wird. Auch kann eine Anpassung manuell durch eine Bedienperson erfolgen.

Auch kann die Pulsweitenmodulation bzw. der Tastgrad jeweils auf Basis der Durchflussmenge durch die dem Schaltelement nachgeordneten Spritzdüsen verändert werden. Wobei hierfür dem Schaltelement nachgeordnet bzw. zumindest einer der wenigstens zwei dem Schaltelement nachgeordneten Spritzdüsen ein Messmittel zur Erfassung der Ausbringmenge zugeordnet sein kann. Das Messmittel ist insbesondere derartig dem Schaltelement nachgeordnet bzw. zugeordnet, dass mittels diesem jeweils die Menge an Spritzflüssigkeit erfasst wird, welche durch das Schaltelement strömt oder welche mittels zumindest einer Spritzdüse ausgebracht wird. Das Messmittel kann bspw. ein Durchflussmesser und/oder ein Volumenstrommesser sein. Auch die durch das Messmittel erfasste Ausbringmenge kann wiederum mittels eines in einer Regelungs- und/oder Steuerungseinrichtung hinterlegten Regelungsprogramm entsprechend mit ausgewertet werden.

Auch kann die Variation der Pulsweitenmodulation und/oder des Tastgrad in Abhängigkeit einer Höhenführung des Spritzgestänges, d.h. in Abhängigkeit eines Abstands zwischen dem Spritzgestänge und dem Pflanzenbestand bzw. der Ackerfläche erfolgen. Wobei diese Höhenführung bzw. dieser Abstand bspw. mittels am Spritzgestänge angeordneten Abstandsensoren und/oder Ultraschallsensoren erfasst werden kann. Wobei hierbei insbesondere gelten kann, je geringer der Abstand desto geringer die benötigte Menge an Spritzflüssigkeit und desto geringer der Tastgrad.

Auch kann vorgesehen sein, dass die Variation der Pulsweitenmodulation und/oder des Tastgrad in Abhängigkeit des Druckniveaus in der Flüssigkeitsleitung und/oder in Abhängigkeit der jeweiligen benötigten Ausbringmenge mittels der Regelungseinrichtung erfolgt. Wobei auch diese Regelgrößen wiederum mittels verschiedenster Überwachungsmittel erfasst bzw. überwacht werden können.

Zudem können die Vorgaben zur Pulsweitenmodulation mittels einer Eingabevorrichtung manuell eingegeben werden oder die Eingabevorrichtung kann mit einer Datenbank oder dergl. in Verbindung stehen. Die Eingabevorrichtung kann bspw. ein mobiles Endgerät und/oder ein Bedientableau oder dergl. sein.

Um ein Leerlaufen oder ein sog. Nachtropfen der Spritzdüsen in den Zeiträumen in denen das Schaltelement geschlossen ist, bzw. in Zeiträumen in denen keine Ausbringung von Spritzflüssigkeit erfolgen soll, zu verhindern, kann den Spritzdüsen und/oder dem Verbindungselement und/oder dem Düsenstock und/oder dem Abzweig und/oder der Flüssigkeitsleitung zugeordnet bzw. vorgeordnet oder in diese integriert ein Vorspannventil sein. Insbesondere ist zumindest ein derartiges Vorspannventil dem Verteilsystem zugeordnet. Das Vorspannventil ist insbesondere derartig ausgeführt, dass dieses erst ab einem definierten Druck öffnet. Sobald dieser Druck, durch bspw. ein verschließen des Schaltelement nicht mehr anliegt, schließt auch dieses Vorspannventil und es erfolgt keine Flüssigkeitsabgabe mehr mit bspw. den Spritzdüsen bzw. erfolgt keine Flüssigkeitsweiterleitung mehr im Verteilsystem. Somit wird mittels des Vorspannventils jeweils ein definierter Staudruck im Verteilsystem aufrechterhalten.

Das Vorspannventil kann hierbei bspw. ein Druckventil sein. Insbesondere kann das Vorspannventil ein Druckzuschaltventil sein. Zudem kann der Vorspanndruck bzw. der Öffnungsdruck des Vorspannventils größer oder gleich 0 bar oder größer oder gleich 0,2 bar und kleiner oder gleich 5 bar sein. Insbesondere kann der Öffnungsdruck des Vorspannventils jedoch 0,5 bar betragen.

Darüber hinaus wäre hierbei auch die Verwendung sog. Tropfstopventilen denkbar, welche auch in die Spritzdüsen integriert sein können. Derartige Ventile weisen in der Regel einen durch eine Feder vorgespannten Öffnungsmechanismus auf, welcher Öffnungsmechanismus erst nach dem Anliegen eines bestimmten Öffnungsdruck geöffnet wird.

In einer Weiterbildung der Erfindung kann bspw. auch die Pumpe, zur Förderung der Spritzflüssigkeit durch die Flüssigkeitsleitung bzw. entlang des Spritzgestänges als Schaltelement dienen, so dass mittels der Pumpe jeweils eine Förderung von Spritzflüssigkeit in einer definierten bzw. definierbaren Pulsweitenmodulation bzw. mit einem veränderbaren Tastgrad erfolgt.

In einer Weiterbildung der Erfindung kann zudem vorgesehen sein, dass die Pulsweitenmodulation jeweils in Abhängigkeit der Anzahl von dem Schaltelement nachgeordneten Spritzdüsen variiert wird. So kann vorgesehen sein, dass bspw. je mehr Spritzdüsen dem Schaltelement nachgeordnet sind, desto kleiner wird der Tastgrad. Dies könnte bspw. bedeuten, dass wenn am Schaltelement ein Tastgrad von 50% vorhanden ist, somit an den Spritzdüsen durch den Abstand den diese sowohl zum Schaltelement als auch zueinander aufweisen der Tastgrad an diesen 80% beträgt. Wobei auch wiederum zur Überwachung des Tastgrad zumindest einer der zumindest zwei dem Schaltelement nachgeordneten Spritzdüsen Messmittel oder dergl. zugeordnet sein können.

Auch könnte vorgesehen sein, dass die Pulsweitenmodulation in Abhängigkeit der Ausführungsform bzw. in Abhängigkeit der Art der Spritzdüsen variiert wird. So weisen die Spritzdüsen jeweils einen festen Durchlassquerschnitt auf, durch welchen Durchlassquerschnitt wiederum die Ausbringmenge mit beeinflusst werden kann. Somit könnte wiederum vorgesehen, dass je größer der Durchlassquerschnitt der dem Schaltelement wenigstens zwei nachgeordneten Spritzdüsen ist, desto größer ist der Tastgrad der Pulsweitenmodulation.

Des Weiteren könnte die Pulsweitenmodulation in Abhängigkeit der Längen der Flüssigkeitsleitung und/oder in Abhängigkeit der Querschnitte der Flüssigkeitsleitungen des Verteilsystem variiert werden, so das wiederum gelten kann, je Länger und/oder je größer der Querschnitt der Flüssigkeitsleitungen desto größer wiederum der Tastgrad. Auch könnten hierbei die Abstände der Spritzdüsen jeweils entsprechend mit Berücksichtigt werden.

Gemäß der Erfindung ist vorgesehen, dass jeweils die Frequenz der Pulsweitenmodulation in Abhängigkeit der Anzahl an dem Schaltelement nachgeordneten Spritzdüsen und/oder in Abhängigkeit der Querschnitte der Spritzdüsen und/oder in Abhängigkeit der Abstände der Spritzdüsen entsprechend variiert wird.

Die dem Schaltelement nachgeordneten wenigstens zwei Spritzdüsen können bspw. mittels eines Verbindungselements verbunden sein. Welches Verbindungselement zudem mit dem Abzweig der Flüssigkeitsleitung verbunden sein kann. Auch kann das Verbindungselement mit dem Düsenstock verbunden sein. Ebenso denkbar wäre es aber auch, dass das Verbindungselement mit einer am Düsenstock angebauten Spritzdüse und/oder Verteildüse verbunden wird. Darüber hinaus könnte an der Flüssigkeitsleitung ebenso eine Spritzdüse und/oder Verteildüse angebracht sein, mit welcher wiederum das Verbindungselement verbunden wird. Dem Verbindungselement können zudem zumindest zwei Spritzdüsen, welche beabstandet zueinander sind, zugeordnet sein. Wobei der Abstand der Spritzdüsen größer oder gleich 10cm ist und insbesondere 25cm und/oder 50cm und/oder 100cm betragen kann.

Das Verbindungselement ist bspw. als L-förmiges, T-Förmiges; V-Förmiges oder U-Förmiges Element ausgebildet. Das Verbindungselement kann zudem ein- oder mehrteilig ausgeführt sein. Zudem kann das Verbindungselement sich einer Rohrkonstruktion zusammengesetzt sein.

Die Verbindung kann kraft- form und/oder stoffschlüssig erfolgen. Die kraft- und/oder formschlüssige Verbindung kann beispielsweise Schraub-, Niet- und/oder Klemmverbindungen oder dergleichen umfassen. Die stoffschlüssige Verbindung kann beispielsweise Schweiß-, Kleb- und/oder Lötverbindungen oder dergleichen umfassen. Wahlweise wären Kombinationen einer kraft-, form- und/oder stoffschlüssigen Verbindung denkbar.

Zudem kann vorgesehen sein, dass eine Schaltung der jeweiligen Spritzdüsen auf Basis einer Überlappung des durch die Verteildüsen erzeugten Spritzstrahls bzw. deren Spritzkegel erfolgt. Wobei diese Überlappung jeweils durch zwei benachbart angeordnete Spritzdüsen definiert wird. Je nachdem ob diese Überlappung ausreichend ist oder nicht, können wiederum weitere Verteildüsen und/oder Spritzdüsen zugeschaltet werden. Hierbei kann wiederum auch vorgesehen sein dass die jeweiligen Spritzkegel sensorisch erfasst werden und mittels eines in einer Regelungseinrichtung hinterlegten Steuerungsprogramms ausgewertet werden. Die Überlappungen können zudem in Abhängigkeit des Höhenabstands des Spritzgestänges über dem Pflanzenbestand definiert sein, so kann wiederum gelten, je größer der Höhenabstand desto größer die Überlappung. Auch kann hierbei wiederum der Abstand der Spritzdüsen zueinander entsprechend mit ausgewertet werden.

Insbesondere ist eine zumindest doppelte Überlappung der Spritzstrahlen bzw. der Spritzkegel vorgesehen, d.h. das jede Pflanze bzw. jeder Bereich der Ackerfläche mittels zumindest zwei Spritzkegel besprüht wird.

Auch könnte vorgesehen sein, dass die wenigstens zwei dem Schaltelement nachgeordneten Spritzdüsen wiederum mittels bspw. eines Ventil ein- und/oder ausgeschaltet werden können, so dass bspw. nur noch mittels einer der wenigstens zwei dem Schaltelement nachgeordneten Spritzdüsen eine Verteilung von Spritzflüssigkeit erfolgt. Zudem wäre es auch denkbar, dass den wenigstens zwei dem Schaltelement nachgeordneten Düsenstocken wiederum ein Ventil zugeordnet ist, so dass bspw. auch nur mittels der Spritzdüsen welche an einem Düsenstock angebaut sind eine Verteilung von Spritzflüssigkeit erfolgt.

Das Spritzgestänge kann in einer Arbeitsposition, d.h. in einer ausgeklappten Position eine große Arbeitsbreite von 18 Meter und mehr aufweisen. Zudem können die Verteildüsen sowie deren Flüssigkeitsleitungen in zwei oder mehr Teilbreiten unterteilt sein, wobei Teilbreiten in diesem Fall bedeutet, dass die Gesamtarbeitsbreite des Spritzgestänge in zwei oder mehr Segmente aufgeteilt sein kann, welche Segmente bspw. jeweils eine separate Flüssigkeitsleitung oder einen separaten Flüssigkeitskreislauf aufweisen können, um somit bspw. beim Befahren von Ecken oder Spitzen jeweils einzelne Bereiche bzw. Segmente des Spritzgestänge entsprechend zu- und/oder abschalten zu können um Überlappungen, d.h. Doppelbehandlungen von bereits besprühten Flächen zu verhindern.

In einer weiteren Ausführung kann vorgesehen sein, dass das Spritzgestänge in wenigstens zwei oder mehr derartiger Teilbreiten unterteilt ist bzw. zumindest zwei Teilbreiten aufweist, welche Teilbreiten jeweils unabhängig voneinander Spritzflüssigkeiten ausbringen können oder nicht. Hierfür kann bspw. vorgesehen sein, dass jeder Teilbreite eine separate Flüssigkeitsleitung und/oder ein separater Flüssigkeitskreislauf zugeordnet ist. Erfindungsgemäß kann hierbei vorgesehen sein, dass jeder Teilbreite ein Schaltelement zugeordnet ist mittels welchem jeweils an jeder Teilbreite eine definierte Pulsweitenmodulation erzeugt werden kann. In einer Weiterbildung der Erfindung kann auch hierbei wiederum vorgesehen sein, dass die Pulsweitenmodulation und somit die Ausbringmenge an den jeweiligen Teilbreiten unterschiedlich ist.

In einer Ausführungsvariante kann vorgesehen sein, dass sich eine Teilbreite aus zumindest einem Schaltelement und zwei diesem nachgeordneten Spritzdüsen und/oder Düsenstöcken zusammensetzt.

Die Anpassung der Ausbringmenge an Spritzflüssigkeit kann bspw. auf Basis des Pflanzenbestand erfolgen, so kann bspw. der Krankheitsbefall oder die Dichte des Pflanzenwachstums sensorisch erfasst werden oder es können von einer Datenbank Angaben hierzu in die Regelungseinrichtung eingelesen werden und die jeweilige Ausbringmenge auf Basis dieser Angaben entsprechend variiert werden.

Darüber hinaus kann die Ausbringmenge auf Basis von Fahrbewegungseigenschaften der Feldspritze variiert werden, so dass bspw. die Ausbringmenge unter Berücksichtigung einer Kurvenfahrt und/oder einer Beschleunigung und/oder einer Verzögerung erhöht oder verringert wird. Wofür wiederum die Pulsweitenmodulation bzw. insbesondere dessen Tastgrad variiert wird.

Darüber hinaus kann erfindungsgemäß vorgesehen sein, dass die Ansteuerung des Verteilsystems auf Basis von wenigstens zwei in der Steuerungs- und/oder Regelungseinrichtung hinterlegten Spritzprofilen erfolgt. Wobei die Spritzprofile hierbei jeweils wenigstens zwei Parameter und/oder Sensorwerte umfassen bzw. berücksichtigen, wobei bei einer Abweichung von wenigstens einem Parameter bzw. Sensorwert eines ersten Spritzprofiles eine automatisierte Ansteuerung der Verteilvorrichtung auf Grundlage der Parameter des wenigstens einen zweiten Spritzprofiles erfolgt. Erfindungsgemäß kann als ein Parameter auch die Pulsweitenmodulation, insbesondere der Tastgrad dieser als Parameter in die Regelung mit einfließen. Darüber hinaus können bspw. die Fahrbewegungseigenschaften und/oder die Höhenführung und/oder die Ausbringmenge als weiterer Parameter dienen.

Zudem können die Vorgaben der Pulsweitenmodulation mittels einer Eingabevorrichtung manuell eingegeben werden oder die Eingabevorrichtung kann mit einer Datenbank oder dergl. in Verbindung stehen. Die Eingabevorrichtung kann bspw. ein mobiles Endgerät und/oder ein Bedientableau oder dergl. sein.

Eine Variation der jeweiligen Steuerungs- und/oder Regelungsgrößen kann jeweils automatisiert mittels einer Regelungs- und/oder Steuerungseinrichtung erfolgen. Ebenso kann eine Variation der jeweiligen Steuerungs- und/oder Regelungsgrößen auch durch eine manuelle Anpassung durch bspw. eine Bedienperson erfolgen.

Es sei noch darauf hingewiesen, dass die Begriffe "Regelungseinrichtung" und "Steuerungseinrichtung" sich auf eine elektronische und/oder mechanische und/oder pneumatische und/oder hydraulische Steuerung beziehen können, die je nach Ausbildung Steuerungsaufgaben und/oder Regelungsaufgaben übernehmen können. Auch wenn hierin der Begriff "Regeln" verwendet wird, kann damit gleichsam zweckmäßig auch "Steuern" umfasst sein. Ebenso kann bei Verwendung des Begriff "Steuern" gleichsam auch eine "Regeln" damit umfasst sein.

Die Regelungseinrichtung kann hierbei insbesondere mit einer elektrischen und/oder pneumatischen und/oder hydraulischen und/oder einer Kombination dieser Energie- und Signalübertragungsarten basierenden Steuerung und/oder Schaltung in Wirkverbindung stehen oder diese mit umfassen bzw. beinhalten. Bspw. kann zur Ansteuerung der Steuerelemente ein BUS-System wie bspw. ein CAN-Bus System vorgesehen sein. Auch drahtlose Kommunikationsschnittstellen wären denkbar.

Wenn zuvor das Erfindungsgemäße Verteilsystem beschrieben wurde, so sei an dieser Stelle ausdrücklich betont, dass alle Aspekte und Ausführungsvarianten, die im Zusammenhang mit dem Verteilsystem erläutert wurden, gleichermaßen Teilaspekte des nachfolgenden erfindungsgemäßen Verfahren betreffen oder sein können. Wenn daher an einer Stelle bei der Beschreibung oder auch bei den Anspruchsdefinitionen vom erfindungsgemäßen Verteilsystem die Rede ist, so gilt dies gleichermaßen für das erfindungsgemäße Verfahren. In umgekehrter Weise gilt dasselbe, so dass auch alle Aspekte die im Zusammenhang mit dem erfindungsgemäßen Verfahren erläutert werden, gleichermaßen Teilaspekte des Verteilsystems sein können.

Zur Lösung der Aufgaben schlägt die Erfindung zudem ein Verfahren zur Verwendung in einer landwirtschaftlichen Feldspritze vor. Welche Feldspritze zur Ausbringung von Spritzflüssigkeiten Verwendung findet. Das Erfindungsgemäße Verfahren umfasst hierbei zumindest die nachfolgenden Schritte:
- Bereitstellung der jeweiligen Spritzflüssigkeit mittels zumindest einem Vorratsbehälter,
- Förderung der Spritzflüssigkeit und Versorgung von an einem Spritzgestänge angebauten Spritzdüsen mit Spritzflüssigkeit mittels einer Pumpe mit variabel veränderbaren Druck vom Vorratsbehälter entlang einer, an einem an der Feldspritze angebauten Spritzgestänge geführten, Flüssigkeitsleitung,
- Zerstäubung der Spritzflüssigkeit mittels zumindest zwei zueinander beabstandeten Spritzdüsen, welche Spritzdüsen in fluider Verbindung, einem mit einer variabel veränderbaren Pulsweitenmodulation angesteuerten Schaltelement nachgeordnet sind, welches Schaltelement der Flüssigkeitsleitung zugeordnet oder nachgeordnet ist.

Die hier beschriebenen Verfahrensschritte können kontinuierlich an der Feldspritze durchgeführt werden.

Der Druck mit dem die jeweilige Spritzflüssigkeit entlang der Flüssigkeitsleitung gefördert wird kann jeweils variabel verändert und/oder auf einen zumindest weitgehend konstanten Wert geregelt werden. Wobei insbesondere vorgesehen sein kann, dass der jeweilige Druck in Abhängigkeit der verwendeten Spritzdüsen und der jeweiligen Pulsweitenmodulation konstant bleibt, d.h. dass dieser jeweils auf einen konstanten Druck in der Flüssigkeitsleitung bzw. im Verteilsystem geregelt wird.

Zudem können zur Überwachung des jeweiligen Druck in der Flüssigkeitsleitung bzw. im Verteilsystem auch entsprechende Sensoren bzw. Überwachungsmittel vorhanden sein. Insbesondere kann dieser Druck als Regelgröße für ein in einer Steuerungs- und/oder Regelungseinrichtung hinterlegtes Regelungsprogramm dienen. Zudem kann das Verfahren vorsehen, dass der jeweilige Druck in der Flüssigkeitsleitung entsprechend der Pulsweitenmodulation bzw. des Tastgrads des Schaltelements variiert wird.

Auch kann die Pulsweitenmodulation bzw. der Tastgrad jeweils auf Basis der Durchflussmenge durch die dem Schaltelement nachgeordneten Spritzdüsen verändert werden. Wobei hierfür dem Schaltelement nachgeordnet bzw. zumindest einer der wenigstens zwei dem Schaltelement nachgeordneten Spritzdüsen ein Messmittel zur Erfassung der Ausbringmenge zugeordnet ist. Das Messmittel kann bspw. ein Durchflussmesser und/oder ein Volumenstrommesser sein. Auch die durch das Messmittel erfasste Ausbringmenge kann wiederum mittels eines in einer Regelungs- und/oder Steuerungseinrichtung hinterlegten Regelungsprogramm entsprechend mit ausgewertet werden.

Auch kann die Variation der Pulsweitenmodulation und/oder des Tastgrad in Abhängigkeit einer Höhenführung des Spritzgestänges, d.h. in Abhängigkeit eines Abstands zwischen dem Spritzgestänge und dem Pflanzenbestand bzw. der Ackerfläche erfolgen. Wobei diese Höhenführung bzw. dieser Abstand bspw. mittels am Spritzgestänge angeordneter Abstandsensoren und/oder Ultraschallsensoren erfasst werden kann. Wobei hierbei insbesondere gelten kann, je geringer der Abstand desto geringer die benötigte Menge an Spritzflüssigkeit und desto geringer der Tastgrad.

Auch kann vorgesehen sein, dass die Variation der Pulsweitenmodulation und/oder des Tastgrad in Abhängigkeit des Druckniveaus in der Flüssigkeitsleitung und/oder in Abhängigkeit der jeweiligen benötigten Ausbringmenge mittels der Regelungseinrichtung erfolgt. Wobei auch diese Regelgrößen wiederum mittels verschiedenster Messmittel bzw. Überwachungsmittel erfasst bzw. überwacht werden können.

Auch könnte vorgesehen sein, dass die wenigstens zwei dem Schaltelement nachgeordneten Spritzdüsen wiederum mittels eines Ventil ein- und/oder ausgeschaltet werden können, so dass bspw. nur noch mittels einer der wenigstens zwei dem Schaltelement nachgeordneten Spritzdüsen eine Verteilung von Spritzflüssigkeit erfolgt bzw. dass nur noch mittels einer Spritzdüse eine Zerstäubung von Spritzflüssigkeit erfolgt. Zudem wäre es auch denkbar, dass den wenigstens zwei dem Schaltelement nachgeordneten Düsenstocken wiederum ein Ventil zugeordnet ist, so dass bspw. auch nur mittels der Spritzdüsen welche an einem Düsenstock angebaut sind eine Verteilung von Spritzflüssigkeit erfolgt.

In einer weiteren Ausführung kann zudem vorgesehen sein, dass das Spritzgestänge in wenigstens zwei oder mehr Teilbreiten unterteilt ist, welche Teilbreiten jeweils unabhängig voneinander Spritzflüssigkeiten ausbringen können oder nicht. Hierfür kann bspw. vorgesehen sein, dass jeder Teilbreite eine separate Flüssigkeitsleitung und/oder ein separater Flüssigkeitskreislauf zugeordnet ist. Erfindungsgemäß kann hierbei vorgesehen sein, dass jeder Teilbreite ein Schaltelement zugeordnet ist, mittels welchem jeweils an jeder Teilbreite eine definierte Pulsweitenmodulation erzeugt wird. In einer Weiterbildung der Erfindung kann auch hierbei wiederum vorgesehen sein, dass die Pulsweitenmodulation und somit die Ausbringmenge an den jeweiligen Teilbreiten unterschiedlich ist.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: eine Seitenansicht einer als selbstfahrende Maschine ausgeführten Feldspritze.
- Figur 2A: eine schematische Ansicht einer Ausführungsvariante eines erfindungsgemäßen Verteilsystem mit zwei mit einer Flüssigkeitsleitung verbundenen Schaltelementen und jeweils zwei diesem Schaltelement nachgeordneten Spritzdüsen.
- Figur 2B: eine schematische Ansicht einer Ausführungsvariante eines erfindungsgemäßen Verteilsystem mit zwei mit einem Flüssigkeitskreislauf verbundenen Schaltelementen und jeweils drei diesem Schaltelement nachgeordneten Spritzdüsen.
- Figur 3: ein Blockschaltbild einer Ausführungsvariante eines erfindungsgemäßen Verteilsystem mit Regelungseinrichtung.
- Figur 4: ein Diagramm einer Pulsweitenmodulation und deren Zusammenhänge.

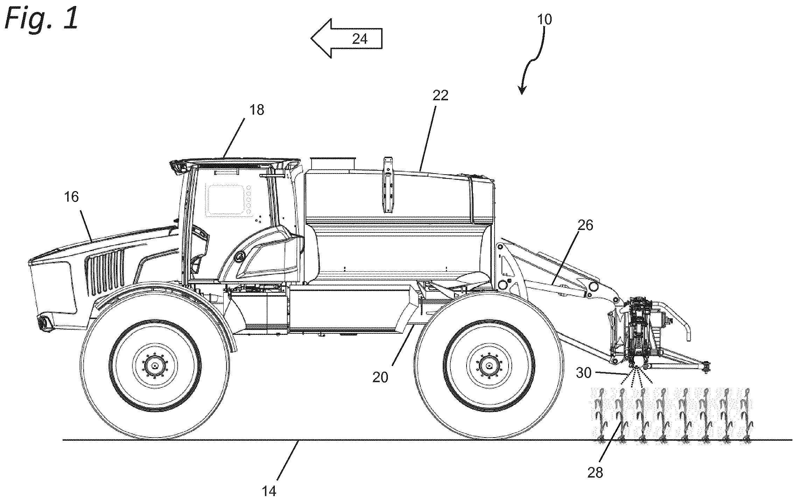

Die in den Figuren 1 bis 4 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Die dargestellten Ausführungsformen stellen lediglich Beispiele dar, wie das erfindungsgemäße Verteilsystem und das erfindungsgemäße Verfahren ausgestaltet sein können und stellen keine abschließende Begrenzung dar.

Eine Ausführungsvariante einer als selbstfahrende Maschine ausgeführten Feldspritze 10 geht aus der Seitenansicht der Figur 1 hervor. An der hierbei gezeigten Feldspritze 10 kann das erfindungsgemäße Verteilsystem 12 zur Ausbringung von Spritzflüssigkeiten vorhanden sein und/oder das Verfahren zur Ausbringung von Spritzflüssigkeiten durchgeführt werden. Die in Figur 1 gezeigte Feldspritze 10 zeigt zunächst Räder 14 mittels welcher Räder 14 die Feldspritze 10 jeweils über eine Ackerfläche bzw. Bodenoberfläche 14 bewegt werden kann. Zudem umfasst die Feldspritze 10 eine Antriebseinheit 16, eine Kabine 18 und einen die Komponenten der Feldspritze 10 tragenden Rahmen 20.

Zur Bevorratung und Bereitstellung der jeweiligen Pflanzenschutz- bzw. Spritzflüssigkeit ist der Feldspritze 10 zudem ein Vorratsbehälter 22 zugeordnet. Zur Verteilung der Spritzflüssigkeit ist der Feldspritze zudem im hinteren Bereich ein sich quer zur Fahrtrichtung 24 erstreckendes und mittels zumindest einem Stellglied 26 in dessen Höhe verstellbares Spritzgestänge 28 zugeordnet.

Am Spritzgestänge 28 sind eine Mehrzahl von hier nicht dargestellten Düsenstöcken mit Verteildüsen und/oder Spritzdüsen angebracht mittels welchen Verteildüsen und/oder Spritzdüsen jeweils ein nach unten bzw. ein zu einem Pflanzenbestand 28 hingerichteter Spritzstrahl 30 erzeugt wird. Wobei hierfür mittels der Spritzdüsen jeweils eine Zerstäubung der Spritzflüssigkeit erfolgt.

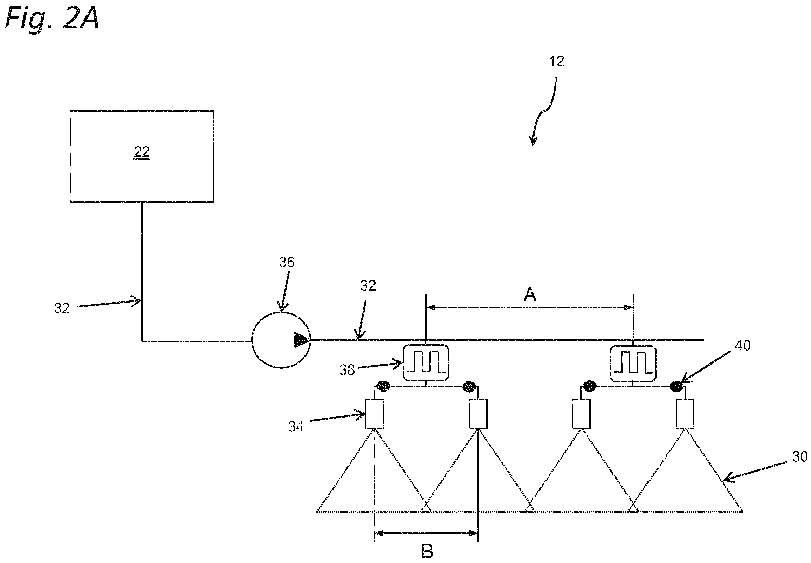

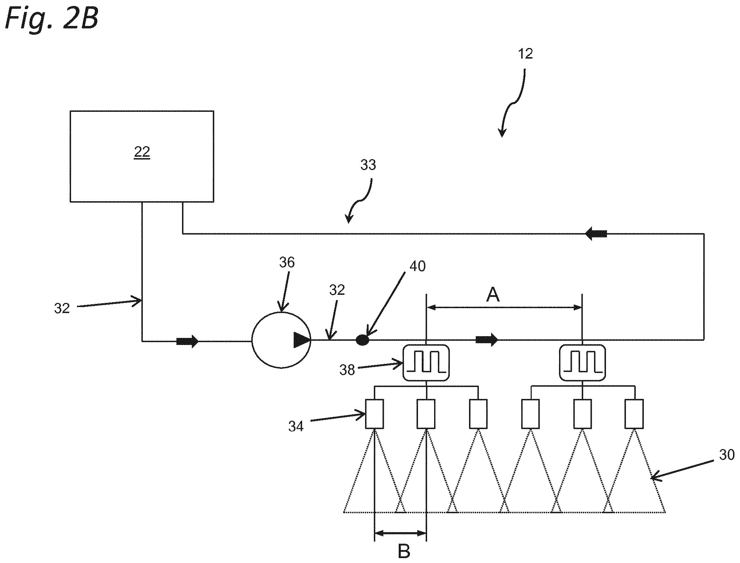

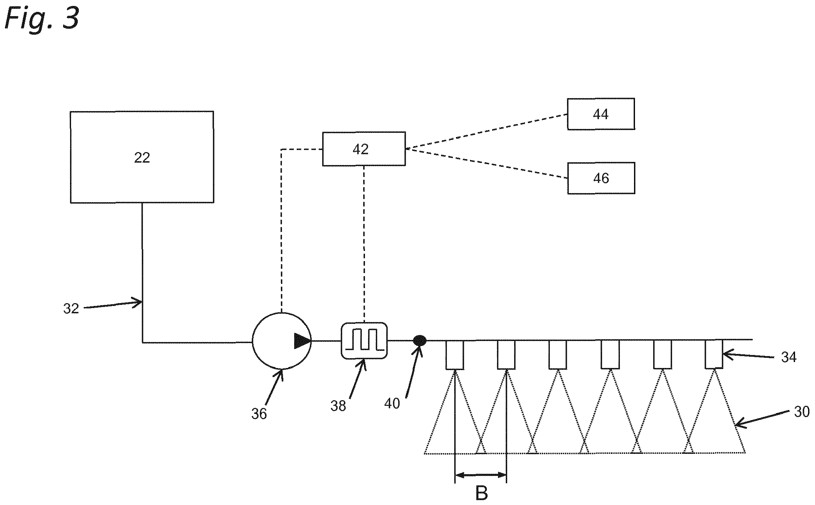

Weitere Details des erfindungsgemäßen Verteilsystems gehen aus den schematischen Ansichten der Figuren 2A & 2B sowie aus dem Blockschaltbild der Figur 3 hervor. Wobei die Figur 2B gegenüber der Figur 2A einen Flüssigkeitskreislauf 33 aufweist. Die hierbei gezeigten Verteilsysteme 12 können bspw. auch einer Teilbreite des Spritzgestänges 28 zugeordnet sein.

Die Verteilsysteme 12 umfassen einen Vorratsbehälter 22, mittels welchem die jeweils auszubringende Spritzflüssigkeit bereitgestellt wird. Die jeweiligen Komponenten des Verteilsystems 12 werden mittels einer bzw. mittels mehreren Flüssigkeitsleitungen 32 verbunden. Auch kann die Flüssigkeitsleitung 32 einen Flüssigkeitskreislauf 33 bilden, was bedeutet, dass die Flüssigkeitsleitung 32 wieder in den Vorratsbehälter 22 mündet. Die jeweilige Flussrichtung der Spritzflüssigkeit ist zur Veranschaulichung mittels Pfeilen dargestellt.

Mittels der Flüssigkeitsleitungen 32 wird die Spritzflüssigkeit vom Vorratsbehälter 22 zu den jeweiligen Düsenstöcken und/oder Spritzdüsen 34 gefördert. Wobei zwischen dem Vorratsbehälter 22 und den Düsenstöcken und/oder den Spritzdüsen 34 zusätzlich eine Pumpe 36 zwischengeschaltet ist, mittels welcher Pumpe 36 der Druck mit dem die Spritzflüssigkeit innerhalb der Flüssigkeitsleitung 32 gefördert wird, variabel verändert werden kann.

Gemäß der Figuren 2A & 2B zweigen an der Flüssigkeitsleitung 32 zwei Schaltelemente 38 ab, wobei dies bspw. mittels eines in die Flüssigkeitsleitung 32 integrierten Abzweig erfolgen kann. Den Schaltelementen 38 nachfolgend bzw. mit diesen wirkverbunden sind zwei zueinander beabstandete Spritzdüsen 34 angeordnet. Wobei neben den Spritzdüsen 34 auch die Schaltelemente 38 zueinander beabstandet sind. So kann der Abstand A zwischen den Schaltelementen 38 bspw. 50cm oder 100cm betragen wohingegen der Abstand B zwischen den Spritzdüsen 25cm oder 50cm betragen kann. Wobei der Abstand A jeweils vom Abstand B abhängig ist, d.h. je größer Abstand B desto größer Abstand A und umgekehrt.

Gemäß den Ausführungsbeispielen der Figuren 2A & 2B könnten die Schaltelemente 38 auch einem Düsenstock und/oder einem Verbindungselement zugeordnet sein. Derartige Düsenstöcke sind sowohl als sog. einfach- und/oder zweifach- und/oder mehrfach Düsenstöcke bekannt an welchen Düsenstöcken wiederum eine und/oder zwei und/oder mehr Spritzdüsen angebracht sein können. Auch könnten an den Düsenstock wiederum entsprechende Verbindungselemente angebracht sein. Ebenso könnte vorgesehen sein, dass die Flüssigkeitsleitung 32 in zwei Düsenstöcke mündet an welchen Düsenstocken wiederum zumindest eine Verteildüse angebracht ist, welchen Verteildüsen wiederum zumindest zwei zueinander beabstandete Spritzdüsen 34 zur Zerstäubung der Spritzflüssigkeit bzw. zur Erzeugung eines Spritzstahl 30 nachgeordnet sind.

Aus der Figur 3 geht darüber hinaus noch ein weiteres Ausführungsbeispiel eines Verteilsystem 12 hervor, bei welchem der Flüssigkeitsleitung 32 ein Schaltelement 38 zugeordnet ist, welchem Schaltelement 38 wiederum eine Mehrzahl von Spritzdüsen 34 nachgeordnet bzw. mit diesem wirkverbunden sind. Wobei die Spritzdüsen 34 hierbei bspw. einen Abstand B zueinander aufweisen welcher größer oder gleich 10cm ist und bspw. 25cm und/oder 50cm und/oder 100cm beträgt. Mit den Spritzdüsen 34 erfolgt wiederum die Zerstäubung der Spritzflüssigkeit bzw. wird mittels der Spritzdüsen 34 wiederum ein nach unten gerichteter Spritzstrahl 30 erzeugt.

Die Schaltelemente 38 gemäß der Figuren 2 & 3 werden jeweils mit einer definierten bzw. mit einer definierbaren Pulsweitenmodulation angesteuert, d.h. in Abhängigkeit dieser Pulsweitenmodulation erfolgt jeweils eine Weiterleitung von Spritzflüssigkeit zu den, dem Schaltelement 38 nachgeordneten wenigstens zwei Spritzdüsen 34. Wobei durch die Wirkverbindung dieser die Pulsweitenmodulation der Schaltelemente 38 auch auf die, dem Schaltelement 38 nachgeordneten Spritzdüsen 34 übertragen wird.

Um insbesondere ein Leerlaufen bzw. ein Nachtropfen der Spritzdüsen 34 in den Zeiträumen in denen das Schaltelement 38 geschlossen ist zu verhindern, kann den Spritzdüsen 34 und/oder dem Düsenstock und/oder der Flüssigkeitsleitung 32 zugeordnet bzw. vorgeordnet oder in diesen integriert ein Vorspannventil 40 sein. Welches Vorspannventil 40 jeweils derartig ausgeführt ist, dass dieses erst ab einem definierten Vorspanndruck bzw. Öffnungsdruck öffnet. Insbesondere ist dem Verteilsystem 12 ein derartiges Vorspannventil 40 zugeordnet. Wobei dieses Vorspannventil 40 zudem dem Schaltelement 38 nachgeordnet ist.

Zur Variation des Drucks in der Flüssigkeitsleitung kann eine Pumpe 36 vorgesehen sein. Wobei die Pumpe 36 hydraulisch und/oder pneumatisch und/oder elektrisch betrieben und mittels einer Regelungseinrichtung 42 entsprechend angesteuert bzw. geregelt werden kann. Zudem können zur Überwachung des jeweiligen Druck auch entsprechende Messmittel bzw. Überwachungsmittel 44 vorhanden sein. Insbesondere kann dieser Druck als Regelgröße für ein in der Regelungseinrichtung 42 hinterlegtes Regelungsprogramm dienen.

Die Variation der Pulsweitenmodulation kann bspw. durch Vorgabe durch eine Bedienperson, aber auch automatisiert erfolgen. Insbesondere erfolgt die Variation der Pulsweitenmodulation mittels einer Regelungs- und/oder Steuerungseinrichtung 42. Die Regelungseinrichtung 42 kann hierbei insbesondere mit einer elektrischen und/oder pneumatischen und/oder hydraulischen und/oder einer Kombination dieser Energie- und Signalübertragungsarten basierenden Steuerung und/oder Schaltung in Wirkverbindung stehen oder diese mit umfassen bzw. beinhalten. Bspw. kann zur Ansteuerung der Steuerelemente 38 ein BUS-System wie bspw. ein CAN-Bus System vorgesehen sein, wobei gemäß der Figur 3 diese Verbindung schematisch durch gestrichelte Linien dargestellt sind.

Auch kann die Pulsweitenmodulation bspw. in Abhängigkeit einer Höhenführung des Spritzgestänges und/oder in Abhängigkeit des Druckniveau in der Flüssigkeitsleitung und/oder in Abhängigkeit der jeweiligen benötigten Ausbringmenge mittels der Regelungseinrichtung 42 variiert werden. Wobei auch diese Regelungsgrößen wiederum mittels verschiedenster Überwachungsmittel erfasst bzw. überwacht werden können.

Zudem können die Vorgaben der Pulsweitenmodulation mittels einer Eingabevorrichtung 46 manuell eingegeben werden oder die Eingabevorrichtung 46 kann mit einer Datenbank oder dergl. in Verbindung stehen. Die Eingabevorrichtung kann bspw. ein mobiles Endgerät und/oder ein Bedientableau oder dergl. sein.

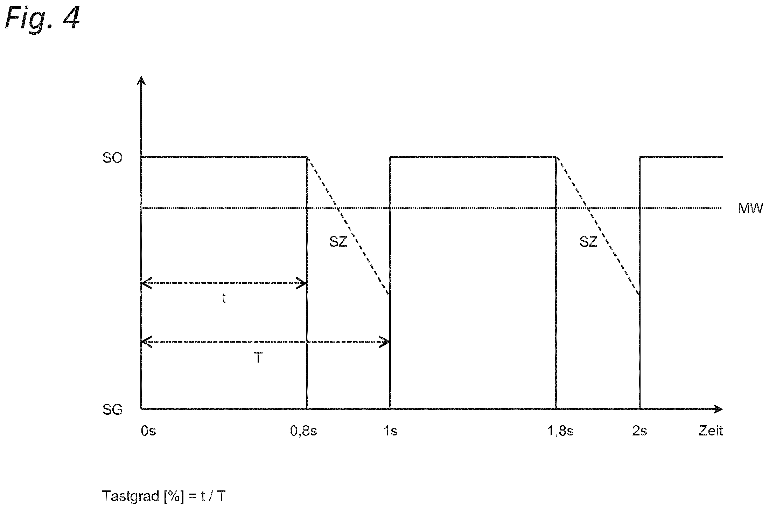

Weitere Details einer Pulsweitenmodulation und deren Zusammenhänge gehen aus dem Diagramm der Figur 4 hervor.

Die Pulsweitenmodulation erfolgt hierbei mit einer Frequenz von 1 Hz, wobei hierbei auch andere Frequenzen möglich wären, bzw. 50Hz oder 100Hz oder 200Hz oder dergl. Die Frequenz kann ein in der Steuerungs- und/oder Regelungseinrichtung hinterlegter Optimierungsparameter sein, welcher Optimierungsparameter in Abhängigkeit der jeweiligen Komponenten des Verteilsystems 12 festgelegt sein kann. Ebenso kann vorgesehen sein, dass die Frequenz in Abhängigkeit der jeweiligen Spritzdüsen 34 erhöht oder verringert wird.

Die Erhöhung oder Verringerung der Ausbringmenge erfolgt auf Basis eines Tastgrad. Dieser Tastgrad wird durch ein Verhältnis zwischen der Impulsdauer t und der Periodendauer T bestimmt. Der Tastgrad ist somit definiert durch t / T. Der Tastgrad wird zudem als Prozentwert % angegeben. Vereinfacht bedeutet dies, dass der Tastgrad die Zeit definiert in der das Schaltelement geöffnet ist.

Im Ausführungsbeispiel wird bspw. der Frequenz von 1 Hz ein Tastgrad von 80% zugrunde gelegt, das bedeutet, dass das Schaltelement 38 theoretisch 0,8s geöffnet ist und 0,2s geschlossen ist. Da jedoch Schaltelemente 38 in der Regel eine Eigenträgheit aufweisen werden diese aufgrund der hohen Frequenzen in der Regel nicht komplett geschlossen, sondern jeweils in Abhängigkeit der Frequenz und des Tastgrad nur auf eine entsprechende sich zwischen der geschlossenen und geöffneten Position einstellenden Zwischenstellungen. Bezogen auf den Durchfluss an Spritzflüssigkeit bedeutet dies, dass sich somit ein Mittelwert MW zwischen der geöffneten Stellung SO des Schaltelement 38 und der geschlossenen Stellung SG des Schaltelements 38 einstellt. So das auch die Ausbringmenge an Spritzflüssigkeit sich auf diesen Mittelwert MW einpendelt, was wiederum bedeutet das somit die Durchflussmenge bzw. die Ausbringmenge an Spritzflüssigkeit gegenüber der geöffneten Stellung SO des Schaltelement 38 reduziert wird. Wie aus dem Diagramm ersichtlich wird, kann die Ausbringmenge insbesondere durch Erhöhung des Tastgrad erfolgen bzw. insbesondere durch Erhöhung der Impulsdauer t.

Zudem ist in Figur 4 darüber hinaus noch ein sich durch die Eigenträgheit des Schaltelement 38 einstellenden Signal des Schließ- bzw. Öffnungsmechanismus des Schaltelement 38 mit abgebildet, welcher im Ausführungsbeispiel der Figur 4 bspw. ein sog. Sägezahnsignal ausbildet. Auch andere Signale wären je nach Ausführungsform des Schaltelements 38denkbar.

Die Erfindung ist nicht auf die vorstehend beschriebenen bevorzugten Ausführungsbeispiele beschränkt. Insbesondere sind die Merkmale der unabhängigen Ansprüche jeweils unabhängig voneinander offenbart. Zusätzlich sind auch die Merkmale der Unteransprüche unabhängig von sämtlichen Merkmalen des jeweiligen unabhängigen Anspruchs 1 oder des Verfahrensanspruchs 19 offenbart.

### Bezugszeichenliste

- 10: Feldspritze
- 12: Verteilsystem
- 14: Bodenoberfläche
- 16: Antriebseinheit
- 18: Kabine
- 20: Rahmen
- 22: Vorratsbehälter
- 24: Fahrtrichtung
- 26: Stellglied
- 28: Pflanzenbestand
- 30: Spritzstrahl
- 32: Flüssigkeitsleitung
- 33: Flüssigkeitskreislauf
- 34: Spritzdüse
- 36: Pumpe
- 38: Schaltelement
- 40: Vorspannventil
- 42: Regelungseinrichtung / Steuerungseinrichtung
- 44: Überwachungsmittel
- 46: Eingabevorrichtung

- t: Impulsdauer
- T: Periodendauer
- MW: Mittelwert
- SO: geöffnete Stellung Schaltelement
- SG: geschlossene Stellung Schaltelement
- SZ: Sägezahnsignal

## Patentansprüche

1. Verteilsystem (12) für eine landwirtschaftliche Feldspritze (10), zur Ausbringung von Spritzflüssigkeiten, mit zumindest einem Vorratsbehälter (22) zur Bereitstellung der jeweiligen Spritzflüssigkeit, wobei die Spritzflüssigkeit mittels einer Pumpe (36) mit variabel veränderbaren Druck und/oder mittels auf einen konstanten Wert geregelten Druck vom Vorratsbehälter (22) entlang einer, an einem an der Feldspritze (10) angebauten Spritzgestänge geführten, Flüssigkeitsleitung (32) gefördert wird, wodurch jeweils Spritzdüsen (34) mit Spritzflüssigkeit versorgt werden, wobei der Flüssigkeitsleitung (32) ein mittels einer variabel veränderbaren Pulsweitenmodulation angesteuertes Schaltelement (38) zugeordnet oder nachgeordnet ist, und dass dem Schaltelement (38) zumindest zwei zueinander beabstandete und mit diesem in fluider Verbindung stehende Spritzdüsen (34) nachgeordnet sind, **dadurch gekennzeichnet, dass** die Frequenz der Pulsweitenmodulation in Abhängigkeit der Anzahl an dem Schaltelement (38) nachgeordneten Spritzdüsen (34) und/oder in Abhängigkeit der Querschnitte der Spritzdüsen (34) und/oder in Abhängigkeit der Abstände der Spritzdüsen (34) entsprechend variiert wird.

2. Verteilsystem (12) nach Anspruch 1, **dadurch gekennzeichnet, dass** die Pulsweitenmodulation durch einen sich durch ein Verhältnis aus Impulsdauer (t) und einer Periodendauer (T) ergebenden Tastgrad sowie durch eine Frequenz definiert wird.

3. Verteilsystem (12) nach Anspruch 1 oder 2, **dadurch gekennzeichnet, dass** eine Erhöhung der Ausbringmenge durch eine Erhöhung des Tastgrad erfolgt, insbesondere durch eine Erhöhung der Impulsdauer (t) und dass eine Verringerung der Ausbringmenge durch eine Verringerung des Tastgrad erfolgt, insbesondere durch eine Verringerung der Impulsdauer (t).

4. Verteilsystem (12) nach einem der vorhergehenden Ansprüche, **dadurch gekennzeichnet, dass** die Frequenz in Abhängigkeit der jeweiligen Verteildüse und/oder Spritzdüse erhöht oder verringert wird.

5. Verteilsystem (12) nach einem der vorhergehenden Ansprüche, **dadurch gekennzeichnet, dass** die Pulsweitenmodulation bzw. der Tastgrad jeweils auf Basis der Durchflussmenge durch die dem Schaltelement (38) nachgeordneten Spritzdüsen (34) verändert wird.

6. Verteilsystem (12) nach einem der vorhergehenden Ansprüche, **dadurch gekennzeichnet, dass** dem Schaltelement (38) nachgeordnet und/oder zumindest einer der wenigstens zwei dem Schaltelement (38) nachgeordneten Spritzdüsen (34) ein Überwachungsmittel oder Messmittel zur Erfassung der Ausbringmenge zugeordnet ist.

7. Verteilsystem (12) nach einem der vorhergehenden Ansprüche, **dadurch gekennzeichnet**, das eine Variation der Pulsweitenmodulation und/oder des Tastgrad in Abhängigkeit einer Höhenführung des Spritzgestänges und/oder in Abhängigkeit des Druckniveaus in der Flüssigkeitsleitung (32) erfolgt.

8. Verteilsystem (12) nach einem der vorhergehenden Ansprüche, **dadurch gekennzeichnet, dass** dem Verteilsystem (12) zumindest ein Vorspannventil (40) zugeordnet ist.

9. Verteilsystem (12) nach einem der vorhergehenden Ansprüche, **dadurch gekennzeichnet, dass** das Vorspannventil (40) einen Vorspanndruck bzw. einen Öffnungsdruck aufweist, der größer oder gleich 0 bar ist oder der größer oder gleich 0,2 bar ist und der kleiner oder gleich 5 bar ist, insbesondere jedoch 0,5 bar beträgt.

10. Verteilsystem (12) nach einem der vorhergehenden Ansprüche, **dadurch gekennzeichnet, dass** die Pulsweitenmodulation jeweils in Abhängigkeit der Anzahl von dem Schaltelement (38) nachgeordneten Spritzdüsen (34) variiert wird.

11. Verteilsystem (12) nach einem der vorhergehenden Ansprüche, **dadurch gekennzeichnet, dass** die Pulsweitenmodulation in Abhängigkeit der Ausführungsform bzw. in Abhängigkeit der Art der Spritzdüsen (34) variiert wird.

12. Verteilsystem (12) nach einem der vorhergehenden Ansprüche, **dadurch gekennzeichnet, dass** die Pulsweitenmodulation in Abhängigkeit der Längen der Flüssigkeitsleitung (32) und/oder in Abhängigkeit der Querschnitte der Flüssigkeitsleitungen (32) variiert werden.

13. Verteilsystem (12) nach einem der vorhergehenden Ansprüche, **dadurch gekennzeichnet, dass** die dem Schaltelement (38) nachgeordneten wenigstens zwei Spritzdüsen (34) mittels eines Verbindungselements verbunden sind.

14. Verteilsystem (12) nach einem der vorhergehenden Ansprüche, **dadurch gekennzeichnet, dass** das Verbindungselement zudem mit dem Abzweig der Flüssigkeitsleitung (32) verbunden ist und/oder dass das Verbindungselement mit dem Düsenstock verbunden ist und/oder dass das Verbindungselement mit einer am Düsenstock angebauten Spritzdüse (34) und/oder Verteildüse verbunden ist.

15. Verteilsystem (12) nach einem der vorhergehenden Ansprüche, **dadurch gekennzeichnet, dass** das Verbindungselement als L-förmiges, T-Förmiges; V-Förmiges oder U-Förmiges Element ausgebildet ist.

16. Verteilsystem (12) nach einem der vorhergehenden Ansprüche, **dadurch gekennzeichnet, dass** die wenigstens zwei dem Schaltelement (38) nachgeordneten Spritzdüsen (34) mittels eines Ventil ein- und/oder ausgeschaltet werden können und/oder dass den wenigstens zwei dem Schaltelement (38) nachgeordneten Düsenstocken wiederum ein Ventil zugeordnet ist.

17. Verteilsystem (12) nach einem der vorhergehenden Ansprüche, **dadurch gekennzeichnet, dass** das Spritzgestänge zumindest zwei Teilbreiten aufweist, welche Teilbreiten jeweils unabhängig voneinander Spritzflüssigkeiten ausbringen können, wobei jeder Teilbreite ein Schaltelement (38) zugeordnet ist mittels welchem an jeder Teilbreite eine definierte Pulsweitenmodulation erzeugt wird.

18. Verteilsystem (12) nach einem der vorhergehenden Ansprüche, **dadurch gekennzeichnet, dass** die zumindest zwei dem Schaltelement (38) nachgeordneten Spritzdüsen (34) und/oder Düsenstöcke in einem Mindestabstand zueinander von 10cm angebracht sind, insbesondere jedoch in einem Abstand von 25cm und/oder 50cm und/oder 100cm zueinander angebracht sind.

19. Verfahren zur Verwendung in einer landwirtschaftlichen Feldspritze (10) zur Ausbringung von Spritzflüssigkeiten aufweisend die Schritte:
- Bereitstellung der jeweiligen Spritzflüssigkeit mittels zumindest einem Vorratsbehälter (22),
- Förderung der Spritzflüssigkeit und Versorgung von an einem Spritzgestänge angebauten Spritzdüsen (34) mit Spritzflüssigkeit mittels einer Pumpe (36) mit variabel veränderbaren Druck und/oder mittels auf einen konstanten Wert geregelten Druck vom Vorratsbehälter (22) entlang einer, an einem an der Feldspritze (10) angebauten Spritzgestänge geführten, Flüssigkeitsleitung (32), und
- Zerstäubung der Spritzflüssigkeit mittels zumindest zwei zueinander beabstandeten Spritzdüsen (34), welche Spritzdüsen (34) in fluider Verbindung einem mit einer variabel veränderbaren Pulsweitenmodulation angesteuerten Schaltelement (38) nachgeordnet sind, welches Schaltelement (38) der Flüssigkeitsleitung (32) zugeordnet oder nachgeordnet ist,
**dadurch gekennzeichnet, dass** die Frequenz der Pulsweitenmodulation in Abhängigkeit der Anzahl an dem Schaltelement (38) nachgeordneten Spritzdüsen (34) und/oder in Abhängigkeit der Querschnitte der Spritzdüsen (34) und/oder in Abhängigkeit der Abstände der Spritzdüsen (34) entsprechend variiert wird.

20. Verfahren nach Anspruch 19, **dadurch gekennzeichnet, dass** dem Schaltelement (38) nachgeordnet und/oder zumindest einer der wenigstens zwei dem Schaltelement (38) nachgeordneten Spritzdüsen (34) ein Überwachungsmittel oder Messmittel zur Erfassung der Ausbringmenge zugeordnet ist.

21. Verfahren nach Anspruch 19 oder 20, **dadurch gekennzeichnet, dass** eine Variation der Pulsweitenmodulation und/oder des Tastgrad in Abhängigkeit einer Höhenführung des Spritzgestänges und/oder in Abhängigkeit des Druckniveaus in der Flüssigkeitsleitung (32) erfolgt.

22. Verfahren nach einem der Ansprüche 19 bis 21, **dadurch gekennzeichnet, dass** die wenigstens zwei dem Schaltelement (38) nachgeordneten Spritzdüsen (34) mittels eines Ventil ein- und/oder ausgeschaltet werden können und/oder dass den wenigstens zwei dem Schaltelement (38) nachgeordneten Düsenstocken wiederum ein Ventil zugeordnet ist.

23. Verfahren nach einem der Ansprüche 19 bis 22, **dadurch gekennzeichnet, dass** das Spritzgestänge zumindest zwei Teilbreiten aufweist, welche Teilbreiten jeweils unabhängig voneinander Spritzflüssigkeiten ausbringen können wobei jeder Teilbreite ein Schaltelement (38) zugeordnet ist mittels welchem jeweils an jeder Teilbreite eine definierte Pulsweitenmodulation erzeugt wird.

## Claims

1. A distribution system (12) for an agricultural field sprayer (10), for the application of spray liquids, with at least one storage container (22) for providing the respective spray liquid, wherein the spray liquid is conveyed by means of a pump (36) at a variably changeable pressure and/or by means of a pressure regulated to a constant value from the storage container (22) along a liquid line (32) guided to a spray boom attached to the field sprayer (10), as a result of which spray nozzles (34) are in each case supplied with spray liquid, wherein a switching element (38) which is activated by means of variably changeable pulse width modulation is assigned to or arranged downstream of the liquid line (32), and in that at least two spray nozzles (34) which are spaced apart from one another and are fluidically connected to the switching element (38) are arranged downstream of the latter, **characterized in that** the frequency of the pulse width modulation is correspondingly varied depending on the number of spray nozzles (34) arranged downstream of the switching element (38) and/or depending on the cross sections of the spray nozzles (34) and/or depending on the distances between the spray nozzles (34).

2. The distribution system (12) according to Claim 1, **characterized in that** the pulse width modulation is defined by a duty factor, which is produced by a ratio of pulse duration (t) and a period duration (T), and by a frequency.

3. The distribution system (12) according to Claim 1 or 2, **characterized in that** the application rate is increased by an increase of the duty factor, in particular by an increase of the pulse duration (t), and **in that** the discharge rate is reduced by a reduction of the duty factor, in particular by a reduction of the pulse duration (t).

4. The distribution system (12) according to one of the preceding claims, **characterized in that** the frequency is increased or reduced depending on the respective distribution nozzle and/or spray nozzle.

5. The distribution system (12) according to one of the preceding claims, **characterized in that** the pulse width modulation or the duty factor is in each case changed on the basis of the flow rate through the spray nozzles (34) arranged downstream of the switching element (38).

6. The distribution system (12) according to one of the preceding claims, **characterized in that** a monitoring means or measurement means for detecting the application rate is assigned downstream of the switching element (38) and/or to at least one of the at least two spray nozzles (34) arranged downstream of the switching element (38).

7. The distribution system (12) according to one of the preceding claims, **characterized in that** the pulse width modulation and/or the duty factor are/is varied depending on a height setting of the spray boom and/or depending on the pressure level in the liquid line (32).

8. The distribution system (12) according to one of the preceding claims, **characterized in that** the distribution system (12) is assigned at least one pre-loading valve (40).

9. The distribution system (12) according to one of the preceding claims, **characterized in that** the pre-loading valve (40) has a pre-loading pressure or an opening pressure which is greater than or equal to 0 bar or which is greater than or equal to 0.2 bar and which is smaller than or equal to 5 bar, but is in particular 0.5 bar.

10. The distribution system (12) according to one of the preceding claims, **characterized in that** the pulse width modulation is in each case varied depending on the number of spray nozzles (34) arranged downstream of the switching element (38).

11. The distribution system (12) according to one of the preceding claims, **characterized in that** the pulse width modulation is varied depending on the embodiment or depending on the type of spray nozzles (34) .

12. The distribution system (12) according to one of the preceding claims, **characterized in that** the pulse width modulation is varied depending on the lengths of the liquid line (32) and/or depending on the cross sections of the liquid lines (32).

13. The distribution system (12) according to one of the preceding claims, **characterized in that** the at least two spray nozzles (34) arranged downstream of the switching element (38) are connected by means of a connecting element.

14. The distribution system (12) according to one of the preceding claims, **characterized in that** the connecting element is also connected to the branch of the liquid line (32), and/or **in that** the connecting element is connected to the nozzle holder, and/or **in that** the connecting element is connected to a spray nozzle (34) and/or distribution nozzle attached to the nozzle holder.

15. The distribution system (12) according to one of the preceding claims, **characterized in that** the connecting element is configured as a L-shaped, T-shaped, V-shaped or U-shaped element.

16. The distribution system (12) according to one of the preceding claims, **characterized in that** the at least two spray nozzles (34) arranged downstream of the switching element (38) can be switched on and/or off by means of a valve, and/or **in that** the at least two nozzle holders arranged downstream of the switching element (38) are in turn assigned a valve.

17. The distribution system (12) according to one of the preceding claims, **characterized in that** the spray boom has at least two partial widths, which partial widths can each apply spray liquids independently of one another, wherein each partial width is assigned a switching element (38) by means of which defined pulse width modulation is produced at each partial width.

18. The distribution system (12) according to one of the preceding claims, **characterized in that** the at least two spray nozzles (34) and/or nozzle holders arranged downstream of the switching element (38) are provided at a minimum distance from one another of 10 cm, but in particular are provided at a distance of 25 cm and/or 50 cm and/or 100 cm with respect to one another.

19. A method for use in an agricultural field sprayer (10) for the application of spray liquids, having the steps of:
- providing the respective spray liquid by means of at least one storage container (22),
- conveying the spray liquid and supplying spray nozzles (34) provided on a spray boom with spray liquid by means of a pump (36) at a variably changeable pressure and/or by means of pressure regulated to a constant value from the storage container (22) along a liquid line (32), which is guided on a spray boom attached to the field sprayer (10), and
- atomizing the spray liquid by means of at least two spray nozzles (34) which are spaced apart from one another, which spray nozzles (34) are arranged downstream of, and fluidically connected to, a switching element (38) activated by variably changeable pulse width modulation, which switching element (38) is assigned to, or arranged downstream of, the liquid line (32), **characterized in that** the frequency of the pulse width modulation is correspondingly varied depending on the number of spray nozzles (34) arranged downstream of the switching element (38) and/or depending on the cross sections of the spray nozzles (34) and/or depending on the distances between the spray nozzles (34).

20. The method according to Claim 19, **characterized in that** a monitoring means or measurement means for detecting the application rate is assigned downstream of the switching element (38) and/or to at least one of the at least two spray nozzles (34) arranged downstream of the switching element (38).

21. The method according to Claim 19 or 20, **characterized in that** the pulse width modulation and/or the duty factor are/is varied depending on a height setting of the spray boom and/or depending on the pressure level in the liquid line (32).

22. The method according to one of Claims 19 to 21, **characterized in that** the at least two spray nozzles (34) arranged downstream of the switching element (38) can be switched on and/or off by means of a valve, and/or **in that** the at least two nozzle holders arranged downstream of the switching element (38) are in turn assigned a valve.

23. The method according to one of Claims 19 to 22, **characterized in that** the spray boom has at least two partial widths, which partial widths can each apply spray liquids independently of one another, wherein each partial width is assigned a switching element (38) by means of which defined pulse width modulation is produced at each partial width.

## Revendications

1. Système de distribution (12) pour un pulvérisateur (10) agricole pour l'épandage de liquides de pulvérisation, avec au moins un réservoir (22) pour fournir le liquide de pulvérisation respectif, dans lequel le liquide de pulvérisation est refoulé au moyen d'une pompe (36) avec une pression pouvant être modifiée de manière variable et/ou une pression régulée sur une valeur constante depuis le réservoir (22) le long d'un conduit de liquide (32) guidé sur une rampe de pulvérisation montée sur le pulvérisateur (10), ce qui permet d'alimenter en liquide de pulvérisation respectivement des buses de pulvérisation (34), dans lequel un élément de commutation (38) piloté au moyen d'une modulation de largeur d'impulsion pouvant être modifiée de manière variable est associé à ou disposé en aval du conduit de liquide (32) et au moins deux buses de pulvérisation (34) tenues à distance l'une par rapport à l'autre et en communication fluidique avec l'élément de commutation (38) sont associées à celui-ci, **caractérisé en ce que** la fréquence de la modulation de largeur d'impulsion varie de manière correspondante en fonction du nombre de buses de pulvérisation (34) disposées en aval de l'élément de commutation (38) et/ou en fonction des sections transversales des buses de pulvérisation (34) et/ou en fonction des distances entre les buses de pulvérisation (34).

2. Système de distribution (12) selon la revendication 1, **caractérisé en ce que** la modulation de largeur d'impulsion est définie par un degré de balayage résultant d'un rapport entre la durée d'impulsion (t) et une durée de période (T) ainsi que par une fréquence.

3. Système de distribution (12) selon la revendication 1 ou 2, **caractérisé en ce qu'**une augmentation de la quantité d'épandage se fait par une augmentation du degré de balayage, en particulier par une augmentation de la durée d'impulsion (t), et qu'une réduction de la quantité d'épandage se fait par une réduction du degré de balayage, en particulier par une réduction de la durée d'impulsion (t).

4. Système de distribution (12) selon l'une quelconque des revendications précédentes, **caractérisé en ce que** la fréquence est augmentée ou réduite en fonction de la buse de distribution et/ou de la buse de pulvérisation respective.

5. Système de distribution (12) selon l'une quelconque des revendications précédentes, **caractérisé en ce que** la modulation de largeur d'impulsion ou le degré de balayage est modifiée ou modifié respectivement sur la base du débit par les buses de pulvérisation (34) disposées en aval de l'élément de commutation (38).

6. Système de distribution (12) selon l'une quelconque des revendications précédentes, **caractérisé en ce qu'**un moyen de surveillance ou moyen de mesure pour détecter la quantité d'épandage est disposé en aval de l'élément de commutation (38) et/ou est associé à au moins une des au moins deux buses de pulvérisation (34) disposées en aval de l'élément de commutation (38).

7. Système de distribution (12) selon l'une quelconque des revendications précédentes, **caractérisé en ce qu'**une variation de la modulation de largeur d'impulsion et/ou du degré de balayage se fait en fonction d'un guidage en hauteur de la rampe de pulvérisation et/ou en fonction du niveau de pression dans le conduit de liquide (32).

8. Système de distribution (12) selon l'une quelconque des revendications précédentes, **caractérisé en ce qu'**au moins une soupape de précontrainte (40) est associée au système de distribution (12).

9. Système de distribution (12) selon l'une quelconque des revendications précédentes, **caractérisé en ce que** la soupape de précontrainte (40) présente une pression de précontrainte ou une pression d'ouverture, qui est supérieure ou égale à 0 bar ou est supérieure ou égale à 0,2 bar et est inférieure ou égale à 5 bar, en particulier toutefois est de 0,5 bar.

10. Système de distribution (12) selon l'une quelconque des revendications précédentes, **caractérisé en ce que** la modulation de largeur d'impulsion varie respectivement en fonction du nombre de buses de pulvérisation (34) disposées en aval de l'élément de commutation (38).

11. Système de distribution (12) selon l'une quelconque des revendications précédentes, **caractérisé en ce que** la modulation de largeur d'impulsion varie en fonction de la forme de réalisation ou en fonction du type des buses de pulvérisation (34).

12. Système de distribution (12) selon l'une quelconque des revendications précédentes, **caractérisé en ce que** la modulation de largeur d'impulsion varie en fonction des longueurs du conduit de liquide (32) et/ou en fonction des sections transversales des conduits de liquide (32).

13. Système de distribution (12) selon l'une quelconque des revendications précédentes, **caractérisé en ce que** les au moins deux buses de pulvérisation (34) disposées en aval de l'élément de commutation (38) sont reliées au moyen d'un élément de liaison.

14. Système de distribution (12) selon l'une quelconque des revendications précédentes, **caractérisé en ce que** l'élément de liaison est relié de plus à l'embranchement du conduit de liquide (32), et/ou que l'élément de liaison est relié au porte-buse, et/ou que l'élément de liaison est relié à une buse de pulvérisation (34) et/ou buse de distribution montée sur le porte-buse.

15. Système de distribution (12) selon l'une quelconque des revendications précédentes, **caractérisé en ce que** l'élément de liaison est réalisé en tant qu'un élément en forme de L, en forme de T, en forme de V ou en forme de U.

16. Système de distribution (12) selon l'une quelconque des revendications précédentes, **caractérisé en ce que** les au moins deux buses de pulvérisation (34) disposées en aval de l'élément de commutation (38) peuvent être activées et/ou désactivées au moyen d'une soupape, et/ou qu'à nouveau une soupape est associée aux au moins deux porte-buses disposés en aval de l'élément de commutation (38).

17. Système de distribution (12) selon l'une quelconque des revendications précédentes, **caractérisé en ce que** la rampe de pulvérisation présente au moins deux largeurs partielles, lesquelles largeurs partielles peuvent épandre respectivement indépendamment les unes des autres des liquides de pulvérisation, dans lequel est associé à chaque largeur partielle un élément de commutation (38), au moyen duquel une modulation de largeur d'impulsion définie est générée sur chaque largeur partielle.

18. Système de distribution (12) selon l'une quelconque des revendications précédentes, **caractérisé en ce que** les au moins deux buses de pulvérisation (34) et/ou porte-buses disposés en aval de l'élément de commutation (38) sont installés à une distance minimale les uns par rapport aux autres de 10 cm, en particulier toutefois à une distance de 25 cm et/ou de 50 cm et/ou de 100 cm les uns par rapport aux autres.

19. Procédé destiné à être utilisé dans un pulvérisateur (10) agricole pour l'épandage de liquides de pulvérisation, présentant les étapes :
- de fourniture du liquide de pulvérisation respectif au moyen d'au moins un réservoir (22),
- de refoulement du liquide de pulvérisation et d'alimentation en liquide de pulvérisation de buses de pulvérisation (34) montées sur une rampe de pulvérisation au moyen d'une pompe (36) avec une pression pouvant être modifiée de manière variable et/ou régulée sur une valeur constante depuis le réservoir (22) le long d'un conduit de liquide (32) guidé sur une rampe de pulvérisation montée sur le pulvérisateur (10), et
- d'atomisation du liquide de pulvérisation au moyen d'au moins deux buses de pulvérisation (34) tenues à distance l'une de l'autre, lesquelles buses de pulvérisation (34) sont disposées en communication fluidique en aval d'un élément de commutation (38) piloté avec une modulation de largeur d'impulsion pouvant être modifiée de manière variable, lequel élément de commutation (38) est associé au conduit de liquide (32) ou est disposé en aval de celui-ci,
**caractérisé en ce que** la fréquence de la modulation de largeur d'impulsion varie de manière correspondante en fonction du nombre de buses de pulvérisation (34) disposées en aval de l'élément de commutation (38) et/ou en fonction des sections transversales des buses de pulvérisation (34) et/ou en fonction des distances entre les buses de pulvérisation (34).

20. Procédé selon la revendication 19, **caractérisé en ce qu'**un moyen de surveillance ou moyen de mesure pour détecter la quantité d'épandage est disposé en aval de l'élément de commutation (38) et/ou est associé à au moins une des au moins deux buses de pulvérisation (34) disposées en aval de l'élément de commutation (38).

21. Procédé selon l'une quelconque des revendications 19 à 20, **caractérisé en ce qu'**une variation de la modulation de largeur d'impulsion et/ou du degré de balayage se fait en fonction d'un guidage en hauteur de la rampe de pulvérisation et/ou en fonction du niveau de pression dans le conduit de liquide (32).

22. Procédé selon l'une quelconque des revendications 19 à 21, **caractérisé en ce que** les au moins deux buses de pulvérisation (34) disposées en aval de l'élément de commutation (38) peuvent être activées et/ou désactivées au moyen d'une soupape, et/ou qu'à nouveau une soupape est associée aux au moins deux porte-buses disposés en aval de l'élément de commutation (38).

23. Procédé selon l'une quelconque des revendications 19 à 22, **caractérisé en ce que** la rampe de pulvérisation présente au moins deux largeurs partielles, lesquelles largeurs partielles peuvent épandre des liquides de pulvérisation respectivement indépendamment les unes des autres, dans lequel est associé à chaque largeur partielle un élément de commutation (38), au moyen duquel une modulation de largeur d'impulsion définie est générée sur chaque largeur partielle.
